# EUROPEAN PATENT APPLICATION

(11) **EP 4 775 431 A1**
(43) Date of publication of application: **15.07.2026**
(21) Application number: 23951537.2
(22) Date of filing: 07.09.2023
(51) Int. Cl.: B60L 3/00

(54) **INFORMATION MANAGEMENT DEVICE, INFORMATION MANAGEMENT METHOD, AND PROGRAM**

(71) Applicant: HONDA MOTOR CO., LTD., Tokyo 105-8404 (JP)
(72) Inventor: AHMED, Abdullah, Reading, Berkshire, RG74SA (GB); TARASIUK, Damian, Reading, Berkshire, RG74SA (GB); PRESTON, Chris, Reading, Berkshire, RG74SA (GB); WEAVER, Alistair, Reading, Berkshire, RG74SA (GB)
(74) Representative: Weickmann & Weickmann PartmbB
(86) International application number: PCT/JP2023/032735
(87) International publication number: WO 2025/052639

(57) **Abstract**

According to an embodiment, an information management device includes a charging facility candidate extractor configured to extract charging facility candidates that are reachable within a prescribed distance or within a prescribed time from a destination, on the basis of charging facility information including location information of a plurality of charging facilities capable of charging a battery mounted on a mobile object and available time periods of the charging facilities, and a provider configured to provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods. The provider provides the mobile object with first route guidance information from a location of the mobile object to a charging facility selected by the user among the charging facility candidates when information indicating that charging of the battery has started at the charging facility is not acquired and provides a communication terminal used by the user with second route guidance information for moving to the destination when information indicating that charging of the battery has started is acquired.

## Description

### TECHNICAL FIELD

The present invention relates to an information management device, an information management method, and a program.

### BACKGROUND ART

Recently, efforts to provide access to sustainable transportation systems have been increasingly active in consideration of vulnerable individuals among participants in transportation. To implement these, research and development (R&D) is focused on further improving traffic safety and convenience through research and development related to navigation technology. In relation to this, conventional technology for searching for charging stands located closer to a maximum point that an electric vehicle can reach based on the remaining charge in a battery, displaying information about nearby facilities within a reachable range during charging from the candidate charging stands, displaying charging times at the candidate charging stands, and allowing a user to select a charging stand is known (see, for example, Patent Document 1).

### Citation List

### Patent Document

Patent Document 1: Japanese Unexamined Patent Application, First Publication No. 2011-174711

### SUMMARY OF INVENTION

### Technical Problem

Meanwhile, in conventional navigation technologies, when an electric vehicle passes through a charging facility before arriving at a destination, it is necessary to provide both route information from the current location to the charging facility and route information from the charging facility to the destination. However, a method for switching route guidance information when a means of transportation for moving to the charging facility is different from a means of transportation from the charging facility to the destination is not considered. Therefore, there is a problem because appropriate route guidance information may not be provided to a user.

To solve the above-described problem, an objective of the present application is to provide an information management device, an information management method, and a program capable of providing more appropriate route guidance information to a user. Also, it is possible to contribute to the development of a sustainable transportation system.

### Solution to Problem

An information management device, an information management method, and a program according to the present invention adopt the following configurations.
(1): According to an aspect of the present invention, there is provided an information management device including: a charging facility candidate extractor configured to extract charging facility candidates that are reachable within a prescribed distance or within a prescribed time from a destination, on the basis of charging facility information including location information of a plurality of charging facilities capable of charging a battery mounted on a mobile object and available time periods of the charging facilities; and a provider configured to provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods, wherein the provider provides the mobile object with first route guidance information from a location of the mobile object to a charging facility selected by the user among the charging facility candidates when information indicating that charging of the battery has started at the charging facility is not acquired and provides a communication terminal used by the user with second route guidance information for moving to the destination when information indicating that charging of the battery has started is acquired.
(2): According to another aspect of the present invention, there is provided an information management device including: a charging facility candidate extractor configured to extract charging facility candidates that are reachable within a prescribed distance or within a prescribed time from a destination, on the basis of charging facility information including location information of a plurality of charging facilities capable of charging a battery mounted on a mobile object and available time periods of the charging facilities; and a provider configured to provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods, wherein the provider provides a communication terminal used by the user with first route guidance information from a location of the mobile object to the charging facility when it is determined that the mobile object has not continuously stopped at the charging facility for a prescribed time or longer and provides the communication terminal with second route guidance information for moving to the destination when it is determined that the mobile object has continuously stopped at the charging facility for the prescribed time or longer.
(3): In the above-described aspect (2), when information indicating that charging of the battery at the charging facility has started is acquired, the provider provides the communication terminal with the second route guidance information for moving to the destination.
(4): In the above-described aspect (1) or (2), when a route information switching instruction is received from the user, the provider switches the route guidance information between the first route guidance information and the second route guidance information.
(5): In the above-described aspect (1) or (2), the information management device further includes a travel time calculator configured to calculate a travel time of the user on the basis of a distance between the charging facility candidate and the destination.
(6): In the above-described aspect (1) or (2), the destination information includes information about a stay time of the user at the destination.
(7): In the above-described aspect (6), the provider provides the user with information about a charging facility candidate at which charging of the battery is completed during a period until the stay time elapses from the estimated time of arrival among the charging facility candidates.
(8): In the above-described aspect (1) or (2), the provider provides the user with information about a state of the battery or charging performance information indicating charging performance of the battery.
(9): In the above-described aspect (1) or (2). the information management device further includes a reservation module configured to reserve a charging facility selected by the user from among the charging facility candidates, wherein the reservation module provides the user with information about available time periods of the reserved charging facility when the estimated time of arrival is updated, and updates or cancels reservation details in accordance with an instruction from the user.
(10): In the above-described aspect (1) or (2), the provider includes: an evaluator configured to evaluate the charging facility candidates; and a recommender configured to recommend a recommended charging facility to the user on the basis of evaluation results of the charging facility candidates evaluated by the evaluator, wherein the evaluator evaluates each charging facility candidate using at least one criterion among a usage fee of the charging facility candidate, a distance between the charging facility candidate and the destination, a travel time from the charging facility candidate to the destination, and charging performance information of the charging facility candidate, and wherein the recommender recommends, as the recommended charging facility, a charging facility candidate having a highest evaluation among the evaluated charging facility candidates.
(11): In the above-described aspect (1) or (2), the information management device further includes a freedom degree setter configured to set a degree of freedom of a stay time at the destination, wherein the charging facility candidate extractor increases the prescribed distance or the prescribed time as the degree of freedom set by the freedom degree setter increases.
(12): In the above-described aspect (1) or (2), the first route guidance information is guidance information for a route along which the mobile object is movable, and the second route guidance information indicates a route along which the user is able to move or a route along which the user is able to move using public transportation.
(13): According to yet another aspect of the present invention, there is provided an information management method including: extracting, by a computer, charging facility candidates that are reachable within a prescribed distance or within a prescribed time from a destination, on the basis of charging facility information including location information of a plurality of charging facilities capable of charging a battery mounted on a mobile object and available time periods of the charging facilities; providing, by the computer, a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods; providing, by the computer, the mobile object with first route guidance information from a location of the mobile object to a charging facility selected by the user among the charging facility candidates when information indicating that charging of the battery has started at the charging facility is not acquired; and providing, by the computer, a communication terminal used by the user with second route guidance information for moving to the destination when information indicating that charging of the battery has started is acquired.
(14): According to yet another aspect of the present invention, there is provided an information management method including: extracting, by a computer, charging facility candidates that are reachable within a prescribed distance or within a prescribed time from a destination, on the basis of charging facility information including location information of a plurality of charging facilities capable of charging a battery mounted on a mobile object and available time periods of the charging facilities; providing, by the computer, a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods; providing, by the computer, a communication terminal used by the user with first route guidance information from a location of the mobile object to the charging facility when it is determined that the mobile object has not continuously stopped at the charging facility for a prescribed time or longer; and providing, by the computer, the communication terminal with second route guidance information for moving to the destination when it is determined that the mobile object has continuously stopped at the charging facility for the prescribed time or longer.
(15): According to yet another aspect of the present invention, there is provided a program for causing a computer to: extract charging facility candidates that are reachable within a prescribed distance or within a prescribed time from a destination, on the basis of charging facility information including location information of a plurality of charging facilities capable of charging a battery mounted on a mobile object and available time periods of the charging facilities; provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods; provide the mobile object with first route guidance information from a location of the mobile object to a charging facility selected by the user among the charging facility candidates when information indicating that charging of the battery has started at the charging facility is not acquired; and provide a communication terminal used by the user with second route guidance information for moving to the destination when information indicating that charging of the battery has started is acquired.
(16): According to yet another aspect of the present invention, there is provided a program for causing a computer to: extract charging facility candidates that are reachable within a prescribed distance or within a prescribed time from a destination, on the basis of charging facility information including location information of a plurality of charging facilities capable of charging a battery mounted on a mobile object and available time periods of the charging facilities; provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods; provide a communication terminal used by the user with first route guidance information from a location of the mobile object to the charging facility when it is determined that the mobile object has not continuously stopped at the charging facility for a prescribed time or longer; and provide the communication terminal with second route guidance information for moving to the destination when it is determined that the mobile object has continuously stopped at the charging facility for the prescribed time or longer.

### Advantageous Effects of Invention

According to the above-described aspects (1) to (16), it is possible to provide a more appropriate route guidance information to a user.

### BRIEF DESCRIPTION OF DRAWINGS

[FIG. 1] A configuration diagram of an information management system 1 using an information management device according to an embodiment.
[FIG. 2] A configuration diagram of an electric vehicle M according to the embodiment.
[FIG. 3] A configuration diagram of a communication terminal 200 according to the embodiment.
[FIG. 4] A configuration diagram of a charging facility 300 according to the embodiment.
[FIG. 5] A configuration diagram of an information management device 400 according to the embodiment.
[FIG. 6] A diagram showing an example of content of a user information DB 452.
[FIG. 7] A diagram showing an example of content of a charging facility DB 454.
[FIG. 8] A configuration diagram of a charging facility manager 434 according to the embodiment.
[FIG. 9] A sequence diagram showing an example of a process for providing information about a charging facility.
[FIG. 10] A diagram showing an example in which information about the charging facility 300 is provided.
[FIG. 11] A diagram showing an example of an image IM10 related to charging facility candidates displayed on the communication terminal 200.
[FIG. 12] A flowchart showing a first example of a route guidance process according to the embodiment.
[FIG. 13] A flowchart showing a second example of the route guidance process according to the embodiment.
[FIG. 14] A flowchart showing a third example of the route guidance process according to the embodiment.
[FIG. 15] A sequence diagram showing an example of a process for updating or canceling reservation details.

### DESCRIPTION OF EMBODIMENTS

Hereinafter, embodiments of an information management device, an information management method, and a program of the present invention will be described with reference to the drawings. Hereinafter, a case where the information management device of the embodiment is applied to an information management system capable of providing information about a route from a current location of a mobile object to a destination, a route to a charging facility where a battery mounted on the mobile object can be charged, and the like will be described. Also, hereinafter, an electric vehicle is used as an example of the mobile object on which the battery is mounted. The electric vehicle is, for example, a battery electric vehicle (BEV) that is run by an electric motor driven by electric power supplied from a travel battery that is mounted thereon. Alternatively, the electric vehicle may be a plug-in hybrid vehicle (PHV) or a plug-in hybrid electric vehicle (PHEV) in which the hybrid vehicle has an external charging function. Also, the electric vehicle includes, for example, all "mobile objects" that are run by an electric motor driven by electric power supplied from a battery such as not only a four-wheeled vehicle, but also a straddle-type two-wheeled vehicle, a three-wheeled vehicle (including a vehicle with two front wheels and one rear wheel in addition to a vehicle with one front wheel and two rear wheels), a power-assisted bicycle, and an electric kickboard.

### [Overall configuration]

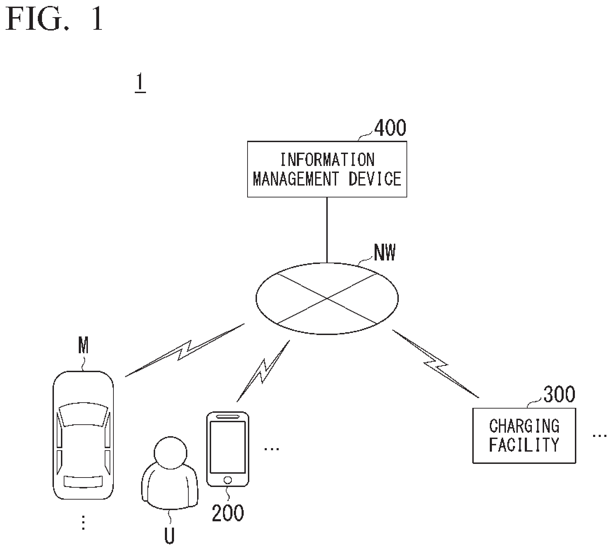

FIG. 1 is a configuration diagram of an information management system 1 using the information management device of the embodiment. The information management system 1 includes, for example, an electric vehicle M, a communication terminal 200 used (possessed) by a user U using the electric vehicle M, a charging facility 300, and an information management device 400. In the information management system 1, a plurality of electric vehicles M, a plurality of communication terminals 200, and/or a plurality of charging facilities 300 may be provided. The electric vehicle M, the communication terminal 200, the charging facility 300, and the information management device 400 can communicate with each other via a network NW or the like as an example. The network NW includes, for example, a cellular network, a Wi-Fi network, Bluetooth (registered trademark), the Internet, a wide area network (WAN), a local area network (LAN), a public circuit, a provider device, a dedicated circuit, a radio base station, and the like.

The electric vehicle M transmits information about a location of the electric vehicle M, information about a destination input by the user U, information about a charging situation of the battery mounted on the electric vehicle M, and the like to the information management device 400 via the network NW or receives information transmitted from the information management device 400 and provides the received information to the user U in the electric vehicle M.

The communication terminal 200 is, for example, a portable terminal such as a smartphone or a tablet terminal. The communication terminal 200 acquires location information and transmits the acquired location information and the like to the information management device 400 via the network NW. Also, the communication terminal 200 transmits information about the destination input by the user U and the like to the information management device 400 or outputs information acquired from the information management device 400 and provides the information to the user U. The communication terminal 200 may communicate with the electric vehicle M through, for example, short-range communication such as Bluetooth. Also, the communication terminal 200 may be mounted on the electric vehicle M and may communicate with various types of devices, display a screen, output a sound, and the like in the vehicle itself as a vehicle mounted terminal (display).

The charging facility 300 is, for example, a facility for charging a battery mounted on the electric vehicle M. The charging facility 300 is provided, for example, on a shoulder of a road, a sidewalk, or the like. Also, the charging facility 300 may be provided in a parking lot of a residential area or a commercial facility, a battery dealer (for example, a dealer), or the like. The charging facility 300 includes a space where the electric vehicle M can be parked in a state in which the electric vehicle M has been charged. The charging facility 300 may be referred to as, for example, a charging stand, a charging spot, a charging station, or the like. Also, the charging facility 300, for example, may have a communication function of communicating with the electric vehicle M that is being charged or the information management device 400. When communication with the electric vehicle M is performed, the charging facility 300 may perform communication via a wire (for example, a signal cable to be described below) or may perform wireless communication. For example, the charging facility 300 acquires location information of the electric vehicle M and information about the battery mounted on the electric vehicle M and transmits the acquired information to the information management device 400.

The information management device 400 may be, for example, a server device or a personal computer (PC), or may be a cloud server configured through cloud computing including one or more information processing devices or the like. Also, the information management device 400, for example, can be distributed across a plurality of devices per function. The information management device 400 manages the location information of each of the charging facilities 300 managed by the information management system 1 and usage situations of the charging facilities 300. Also, the information management device 400 acquires location information. information about the destination, an estimated time of arrival at the destination, and the like from the electric vehicle M or the communication terminal 200 or extracts candidates for the charging facility 300 that can be used by the electric vehicle M while the user U is staying at the destination to transmit the extracted candidates to the electric vehicle M or the communication terminal 200. Also, the information management device 400 reserves the charging facility 300 selected by the user U from the candidates of the charging facility 300 or transmits reservation information to the electric vehicle M or the communication terminal 200. Also, the information management device 400 provides the user U with route guidance information for moving to the destination or to the charging facility 300 (for example, first route guidance information and second route guidance information to be described below).

Next, a function of each of the electric vehicle M, the communication terminal 200, the charging facility 300, and the information management device 400 will be specifically described.

### [Electric vehicle]

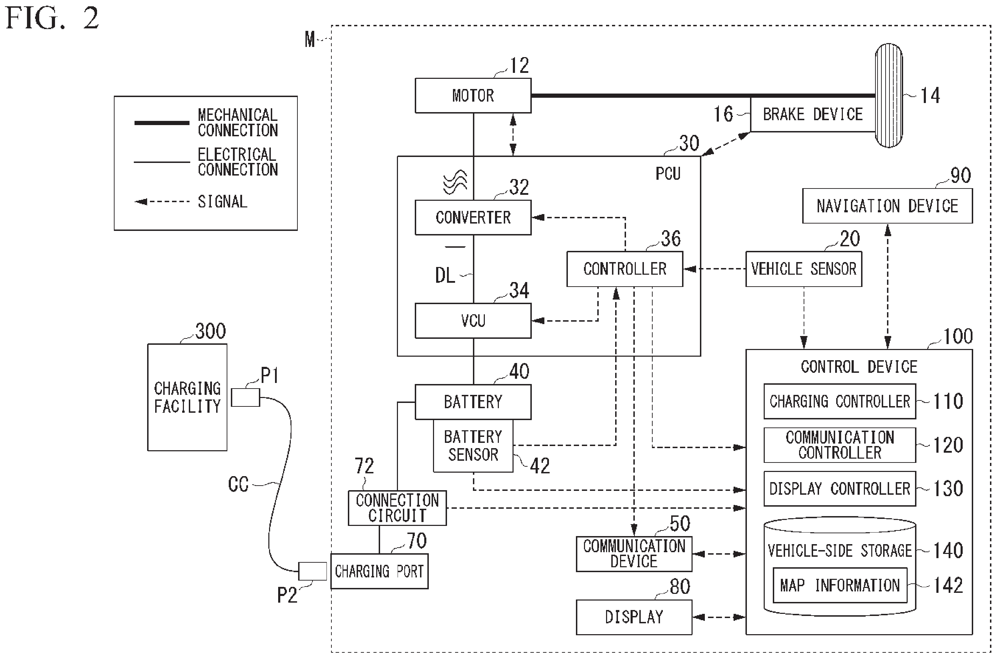

FIG. 2 is a configuration diagram of the electric vehicle M of the embodiment. The electric vehicle M includes, for example, a motor 12, a drive wheel 14, a brake device 16, a vehicle sensor 20, a power control unit (PCU) 30, a battery 40, a battery sensor 42, a communication device 50, a charging port 70, a connection circuit 72, a display 80, a navigation device 90, and a control device 100.

The motor 12 is, for example, a three-phase alternating current (AC) motor. A rotor of the motor 12 is connected to the drive wheel 14. The motor 12 outputs motive power to the drive wheel 14 using supplied electric power. Also, the motor 12 generates power using kinetic energy of the electric vehicle M when the electric vehicle M is decelerating. The energy generated by the motor 12 may be used to charge the battery 40.

The brake device 16 includes, for example, a brake caliper, a cylinder that transfers hydraulic pressure to the brake caliper, and an electric motor that generates hydraulic pressure in the cylinder. The brake device 16 may include a mechanism that transfers hydraulic pressure generated according to an operation of a brake pedal to the cylinder via a master cylinder as a backup. The brake device 16 is not limited to the above-described configuration and may be an electronically controlled hydraulic brake device that transfers the hydraulic pressure of the master cylinder to the cylinder. When the brake device 16 is operated, the motor 12 generates a regenerative current. The energy due to this regenerative current (regenerative energy) may be used to charge the battery 40.

The vehicle sensor 20 includes, for example, an accelerator opening degree sensor, a vehicle speed sensor, a brake depression amount sensor, a location sensor (an example of a location acquirer), and a temperature sensor. The accelerator opening degree sensor is attached to an accelerator pedal and detects the operation amount of the accelerator pedal as an accelerator opening degree. The vehicle speed sensor includes, for example, a wheel speed sensor attached to each wheel and a speed calculator, and derives a speed of a vehicle (a vehicle speed) in combination with a wheel speed detected by the wheel speed sensor. The brake depression amount sensor is attached to the brake pedal and detects the operation amount of the brake pedal as the brake depression amount. The location sensor acquires the location information (for example, latitude and longitude information) of the electric vehicle M by, for example, a global navigation satellite system (GNSS) receiver (not shown). The temperature sensor detects a temperature outside of the vehicle or a temperature inside of the vehicle. Information acquired by each sensor described above is output to the controller 36 or the control device 100.

The PCU 30 includes, for example, a converter 32, a voltage control unit (VCU) 34, and a controller 36. A case where the above-described components are collectively configured as the PCU 30 is only an example. The above-described components may be disposed in a distributed manner.

The converter 32 is, for example, an AC-direct current (DC) converter. A DC side terminal of the converter 32 is connected to a DC link DL. The battery 40 is connected to the DC link DL via the VCU 34. The converter 32 converts an AC generated by the motor 12 into a DC and outputs the DC to the DC link DL.

The VCU 34 is, for example, a DC-DC converter. The VCU 34 boosts clectric power supplied from the battery 40 and outputs the boosted electric power to the DC link DL.

The controller 36 includes, for example, a motor controller, a brake controller, and a battery/VCU controller. The motor controller, the brake controller, and the battery/VCU controller may be replaced with separate control devices, for example, control devices such as a motor electronic control unit (ECU), a brake ECU. and a battery ECU.

The controller 36 controls the motor 12 on the basis of the output of the vehicle sensor 20 in the motor controller. The controller 36 controls the brake device 16 on the basis of the output of the vehicle sensor 20 in the brake controller. Also, the controller 36 outputs information about the vehicle speed detected by the vehicle sensor 20 to the control device 100. The controller 36 acquires a state of the battery 40 on the basis of the output of the battery sensor 42 attached to the battery 40 in the battery/VCU controller and outputs the acquired state to the VCU 34 and the control device 100. The state of the battery 40 is, for example, a state of charge (SOC). The SOC includes, for example, the remaining charge amount, a charging rate, an amount of electric power with which the battery 40 is charged per prescribed time, and the like. The output of the SOC may be performed repeatedly at prescribed timings. Also, the controller 36 may estimate a deterioration degree of the battery 40 on the basis of the information acquired from the battery sensor 42. The VCU 34 increases a voltage of the DC link DL in accordance with an instruction from the battery/VCU control. Also, the controller 36 may acquire an amount of electric power generation energy and an amount of regenerative energy from the motor 12 and control charging of the battery 40.

The battery 40 is, for example, a secondary battery such as a lithium-ion battery or an all-solid-state battery. The battery 40 stores electric power for running of the electric vehicle M. For example, the battery 40 is charged with electric power supplied from the external charging facility 300 via the charging port 70 of the electric vehicle M to store the electric power and is discharged for running of the electric vehicle M. Also, the battery 40 may store electric power for running of the electric vehicle M and the like with the electric power generation energy and the regenerative energy described above.

The battery sensor 42 includes, for example, a current sensor, a voltage sensor, and a temperature sensor. The battery sensor 42 detects an electric current value, a voltage value, and a temperature of the battery 40 by, for example, the sensors. Also, the battery sensor 42 detects a state (SOC) of the battery 40. Also, the battery sensor 42 may detect whether or not the electric vehicle M is being charged by electric power supplied from the charging facility 300. The battery sensor 42 outputs the detected information to the controller 36 or the control device 100.

The communication device 50 includes, for example, a wireless module for connecting a cellular network or a Wi-Fi network. The communication device 50 transmits information from the controller 36 and the control device 100 to the information management device 400 via the network NW. Also, the communication device 50 receives information transmitted by the information management device 400 and outputs the received information to the control device 100. Also, the communication device 50 may communicate with the communication terminal 200 or communicate with the charging facility 300 according to control of the communication controller 120.

The charging port 70 is provided facing the outside of the vehicle body of the electric vehicle M. The charging port 70 is connected to the charging facility 300 via the charging cable CC. The charging cable CC includes, for example, a first plug P1 and a second plug P2. The first plug P1 is connected to the charging facility 300 and the second plug P2 is connected to the charging port 70. Electric power supplied from the charging facility 300 is supplied to the charging port 70 via the charging cable CC. Also, the charging cable CC includes a signal cable attached to a power cable. The signal cable mediates communication between the electric vehicle M and the charging facility 300. Accordingly, each of the first plug P1 and the second plug P2 is provided with a power connector for connecting the power cable and a signal connector for connecting the signal cable.

Also, a connection circuit 72 may be provided between the charging port 70 and the battery 40. The connection circuit 72 transmits DC power supplied from the charging facility 300 to the battery 40 via the first plug P1, the charging cable CC, the second plug P2, and the charging port 70. Also, the connection circuit 72 may perform control for supplying DC power transmitted from the battery 40 to the charging facility 300 via the charging port 70, the second plug P2, the charging cable CC, and the first plug P1.

Also, the connection circuit 72 detects that the charging cable CC (the second plug P2) has been connected to the charging port 70 of the electric vehicle M. Also, the connection circuit 72 may detect that the supply of electric power from the charging facility 300 to the battery 40 has been started based on a power transmission status. The connection circuit 72 outputs, to the control device 100, information indicating that the charging cable CC has been connected to the charging port 70 or that the supply of electric power to the battery 40 has been started.

The display 80 is, for example, a liquid crystal display (LCD) or an organic electro-luminescence (EL) display, or the like. The display 80 is installed on, for example, a meter panel including an instrument such as a vehicle speed meter provided on an instrument panel in front of the driver's seat at which a steering wheel in the cabin is provided. Also, the display 80 is installed, for example, near the center of the instrument panel in the cabin. Also, the display 80 may be a display on which a human machine interface (HMI) of another in-vehicle device (for example, the navigation device 90) is provided. The display 80 displays information that is provided to the user U in the electric vehicle M on the basis of the control of the control device 100 (for example, information about charging facility candidates, information about reservations of charging facilities 300, information about routes, and the like). The display 80 may be a touch panel or the like, and, in this case, receives instructions from the user U in the electric vehicle M (e.g., an instruction to switch route guidance information).

The navigation device 90 has, for example, a global navigation satellite system (GNSS) receiver, a guidance controller, a storage storing map information, and the like. The GNSS receiver identifies a location of the electric vehicle M on the basis of signals received from GNSS satellites. A location of the electric vehicle M may be identified or corrected by an inertial navigation system (INS) using an output of the vehicle sensor 20. For example, the guidance controller decides on a route from the location of the electric vehicle M identified by the GNSS receiver (or any input location) to a destination input by the user U with reference to the map information and causes the display 80 to output route guidance information via the control device 100 so that the electric vehicle M travels along a route. The map information is, for example, information in which a road shape is expressed by a link indicating a road and nodes connected by the link. The map information stores, for example, road information associated with latitude and longitude (road shape (width, curvature, or slope), locations of stop lines and pedestrian crossings), point of interest (POI) information, traffic regulation information, address information (address/postal code), contact information (address information), facility information, and the like. The facility information includes, for example, location information of the charging facility 300. information for identifying the charging facility 300 (identification information), and the like. The map information may be updated at any time by the communication device 50 communicating with the external device. The map information may be stored in the vehicle-side storage 140 of the control device 100 to be described below (map information 142 to be described below).

The navigation device 90 may transmit a current location and a destination of the electric vehicle M to the information management device 400 or another external device (for example, a navigation server) via the communication device, and acquire a route from a transmission destination.

Also, the navigation device 90 calculates an estimated time of arrival at the destination from the route (distance) from the current location of the electric vehicle M to the destination, the current time, and the like. Also, location information acquired by the navigation device 90, information about the destination, and information about an estimated time of arrival and the like are transmitted to the information management device 400 according to, for example, control of the control device 100.

The control device 100 includes, for example, a charging controller 110, a communication controller 120, a display controller 130. and a vehicle-side storage 140. The charging controller 110, the communication controller 120, and the display controller 130 are implemented, for example, by a hardware processor such as a central processing unit (CPU) executing the program (software). Also, some or all of these components may be implemented by hardware (including a circuit; circuitry) such as a large-scale integration (LSI) circuit, an application-specific integrated circuit (ASIC), a field-programmable gate array (FPGA), or a graphics processing unit (GPU) or may be implemented by software and hardware in cooperation.

The program may be pre-stored in a storage device (a storage device including a non-transitory storage medium) such as a hard disk drive (HDD) or a flash memory provided in the electric vehicle M or may be stored in a removable storage medium (a non-transitory storage medium) such as a digital video disc (DVD) or a compact disc (CD)-read-only memory (ROM) and installed in the HDD or the flash memory provided in the electric vehicle M when the storage medium is mounted in a drive device provided in the electric vehicle M.

The vehicle-side storage 140 may be implemented by the above-described various types of storage devices, a solid-state drive (SSD), an electrically erasable programmable read only memory (EEPROM), a ROM, a random-access memory (RAM), or the like. The vehicle-side storage 140 stores, for example, information, programs, and other various types of information obtained from the battery sensor 42, the controller 36, the communication device 50, the display 80, the charging controller 110, and the like. Also, the vehicle-side storage 140 may store the map information 142.

The charging controller 110 controls the charging of the battery 40. For example, the charging controller 110 controls the battery 40 or the charging facility 300 so that the battery 40 is charged with clectric power supplied from the charging facility 300 when the charging rate of the battery 40 is less than a threshold value and charging ends (or charging is not performed) when the charging rate is greater than or equal to the threshold value. Also, the charging controller 110 may determine whether or not the battery 40 of the electric vehicle M is being charged. For example, the charging controller 110 refers to the map information 142 on the basis of the location information of the electric vehicle M detected by the location sensor of the vehicle sensor 20 and determines that the battery 40 is being charged when the location of the electric vehicle M is a location within a prescribed distance from an installation location of the charging facility 300 and an amount of electric power with which the battery 40 is charged per prescribed period of time is greater than or equal to a threshold value.

The charging controller 110 may also determine whether or not charging of the battery 40 of the electric vehicle M has been started. In this case, when the connection circuit 72 detects that the charging cable CC (the second plug P2) has been connected to the charging port 70 or detects that supply of electric power from the charging facility 300 to the battery 40 has been started as described above, the charging controller 110 determines that charging of the battery 40 of the electric vehicle M has been started. In addition, the charging controller 110 may determine that supply of electric power to the battery 40 has been started or that the battery 40 is being charged when a prescribed time has elapsed after the charging cable CC (the second plug P2) is connected to the charging port 70, or when electric power has been continuously supplied to the battery 40 for a prescribed time or longer.

Also, the charging controller 110 acquires charging performance information of the battery 40. The charging performance information includes, for example, information about a total power amount or an available output power amount of the battery 40, the charging facility 300 that can be connected, and the like. Also, the charging performance information may include information about a degree of deterioration of the battery 40.

The communication controller 120 controls communication with the information management device 400, the communication terminal 200. the charging facility 300, and other external devices via the communication device 50. For example, the communication controller 120 transmits information obtained by the vehicle sensor 20 or the controller 36, the battery sensor 42, the communication device 50, the display 80, the navigation device 90, and the charging controller 110 to the information management device 400 or the communication terminal 200. Also, the communication controller 120 receives information transmitted from the information management device 400, the communication terminal 200, and the charging facility 300.

The display controller 130 causes the display 80 to display information about the electric vehicle M or the battery 40. information about the charging facility 300, and the like obtained from the vehicle sensor 20 or the controller 36, the battery sensor 42, the communication device 50, the navigation device 90, the charging controller 110, the communication terminal 200, the charging facility 300, the information management device 400, and the like. For example, the display controller 130 generates an image showing the current location or the destination of the electric vehicle M, the charging facility candidate, and the charging facility selected by the user U, an image showing the route to the destination or the charging facility, an image showing reservation information of the charging facility 300, and the like, and causes the display 80 to display the generated images. Also, the display controller 130 may cause a sound or the like associated with the image displayed on the display 80 to be output from the display 80.

### [Communication terminal]

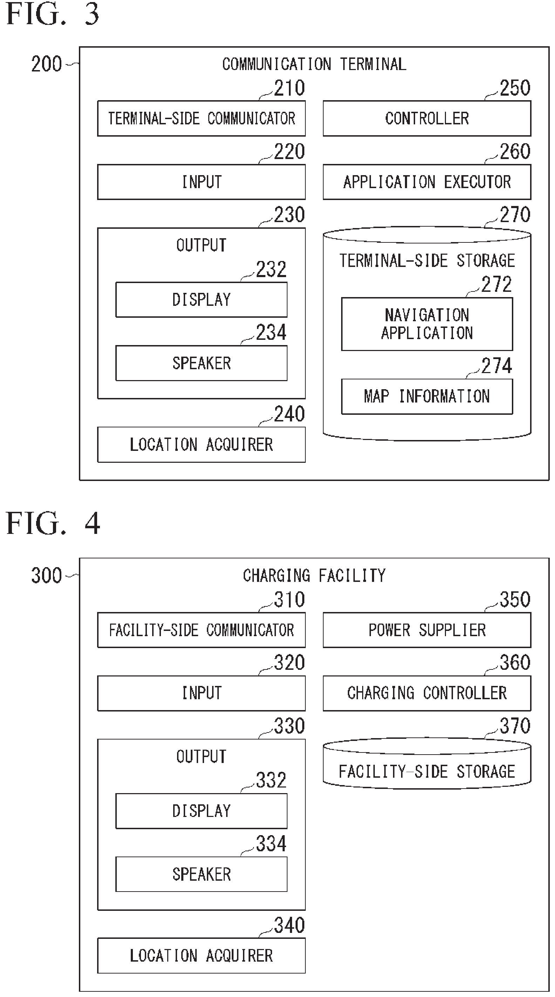

FIG. 3 is a configuration diagram of the communication terminal 200 of the embodiment. The communication terminal 200 includes, for example, a terminal-side communicator 210, an input 220, an output 230, a location acquirer 240, a controller 250, an application executor 260, and a terminal-side storage 270. The location acquirer 240, the controller 250, and the application executor 260 are implemented, for example, by a hardware processor such as a CPU executing the program (software). Also, some or all of these components may be implemented by hardware (including a circuit; circuitry) such as an LSI circuit, an ASIC, an FPGA, or a GPU or may be implemented by software and hardware in cooperation. The program may be pre-stored in a storage device (a storage device including a non-transitory storage medium) such as an HDD or a flash memory provided in the communication terminal 200 or may be stored in a removable storage medium (a non-transitory storage medium) such as a DVD or a CD-ROM and installed in the HDD or the flash memory provided in the communication terminal 200 when the storage medium is mounted in a drive device provided in the communication terminal 200.

The terminal-side storage 270 may be implemented by the various types of storage devices described above, an SSD, an EEPROM, a ROM, a RAM, or the like. For example, the terminal-side storage 270 stores a navigation application 272, map information 274, a program. and various other types of information. The map information 274 has information similar to the map information 142 described above.

The terminal-side communicator 210, for example, communicates with the information management device 400 and other external devices via the network NW. Also, the terminal-side communicator 210 may communicate with the electric vehicle M in which the user U is located through short-range communication.

The input 220, for example, receives an input of the user U by operating various types of keys, buttons, and the like. The input 220 may include, for example, a microphone, and receive a sound input of the user U.

The output 230 includes, for example, a display 232 and a speaker 234. The display 232 is, for example, an LCD or an organic EL display. The output 230 displays various types of images on the display 232 or outputs a sound from the speaker 234 according to control of the application executor 260 or the controller 250. Also, for example, as a touch panel, the display 232 may have a function of the input 220.

The location acquirer 240 acquires location information (for example, latitude and longitude information) of the communication terminal 200 by a built-in GPS device (not shown). Also, the location acquirer 240 may acquire the location information of the electric vehicle M detected by the vehicle sensor 20 of the electric vehicle M when communication with the electric vehicle M is performed.

The controller 250 controls all components of the communication terminal 200. The controller 250 causes information received by the input 220 to be stored in the terminal-side storage 270 or causes the information to be transmitted to the information management device 400 via the terminal-side communicator 210. Also, the controller 250, for example, may cause information about images and sounds acquired from the information management device 400 via the terminal-side communicator 210 and the like to be output from the output 230 and generate an image or a sound on the basis of information acquired from the information management device 400 to cause the generated image or sound to be output from the output 230.

The application executor 260 is implemented by executing the navigation application 272 stored in the terminal-side storage 270. The navigation application 272, for example, is downloaded from an external device via a network and installed on the communication terminal 200. The navigation application 272 extracts a route to an input destination on the basis of information input by the input 220, the location information acquired by the location acquirer 240, information about nearby spots acquired from the map information 274, and the like and causes the output 230 to output an extraction result. Also, the navigation application 272 calculates an estimated time of arrival at the destination from the route (distance) from the current location to the destination, the current time, and the like. Also, the navigation application 272 transmits location information of the communication terminal 200, information about the destination, and information about the estimated time of arrival and the like to the information management device 400, receives information about charging facility candidates from the information management device 400, and causes the output 230 to output the information. Also, the navigation application 272 transmits information about the charging facility 300 selected by the user U from one or more charging facility candidates to the information management device 400, and the information management device 400 performs a process for reserving the charging facility 300, acquiring information about the charging facility 300 that has been reserved to cause the output 230 to output the information, and the like. In this case, the navigation application 272 receives, from the information management device 400, route guidance information and the like from the charging facility 300 selected by the user U or from the current location of the communication terminal 200 to the destination, and causes the output 230 to output the information in the form of images or sounds. Also, the navigation application 272, for example, receives a route guidance information switching instruction or the like from the user U and transmits the instruction to the information management device 400, receives route guidance information corresponding to the instruction, and causes the output 230 to output the received information.

### [Charging facility]

FIG. 4 is a configuration diagram of the charging facility 300 of the embodiment. The charging facility 300 includes, for example, a facility-side communicator 310, an input 320, an output 330, a location acquirer 340, a power supplier 350, a charging controller 360, and a facility-side storage 370. The location acquirer 340, the power supplier 350, and the charging controller 360 are implemented, for example, by a hardware processor such as a CPU executing the program (software). Also, some or all of these components may be implemented by hardware (including a circuit; circuitry) such as an LSI circuit, an ASIC, an FPGA, or a GPU or may be implemented by software and hardware in cooperation. The program may be pre-stored in a storage device (a storage device including a non-transitory storage medium) such as an HDD or a flash memory provided in the charging facility 300 or may be stored in a removable storage medium (a non-transitory storage medium) such as a DVD or a CD-ROM and installed in the HDD or the flash memory provided in the charging facility 300 when the storage medium is mounted in a drive device provided in the charging facility 300.

The facility-side storage 370 may be implemented by the various types of storage devices described above, an SSD, an EEPROM, a ROM, a RAM, or the like. The facility-side storage 370 stores, for example, programs and various other types of information.

The facility-side communicator 310, for example, communicates with the information management device 400 and other external devices via the network NW. Also, the facility-side communicator 310 may communicate with the electric vehicle M to which electric power is supplied through the charging cable CC, short-range conumunication, or the like.

The input 320, for example, receives an input of the user U by operating various types of keys, buttons, and the like. The input 320 may include, for example, a microphone, and receive a sound input of the user U.

The output 330 includes, for example, a display 332 and a speaker 334. The display 332 is, for example, an LCD or an organic EL display. The output 330 displays various types of images on the display 332 or outputs a sound from the speaker 334 according to control of the charging controller 360. Also, for example, as a touch panel, the display 332 may have a function of the input 320.

The location acquirer 340 acquires location information (for example, latitude and longitude information) of the charging facility 300 by a built-in GPS device (not shown). Also, when the charging facility 300 is installed in a fixed location, the location acquirer 340 may acquire location information of the charging facility 300 stored in the facility-side storage 370.

When connected to the electric vehicle M via the charging cable CC, the power supplier 350 supplies electric power to the battery 40 mounted on the electric vehicle M according to control of the charging controller 360.

When an instruction for charging the electric vehicle M (the battery 40) has been received from the user U through the input 320, the charging controller 360 acquires information about a state of the battery 40 mounted on the electric vehicle M. Also, the charging controller 360, for example, causes the power supplier 350 to supply clectric power to the battery 40 when the charging rate of the battery 40 included in the SOC of the battery 40 is less than the threshold value. Also, the charging controller 360 transmits information about a usage situation of the charging facility 300 to the information management device 400 at a prescribed cycle or at a prescribed timing together with identification information for identifying the charging facility 300. The information about the usage situation includes, for example, a charging start time for the electric vehicle M connected through the charging cable CC, a charging end time (an estimated end time) based on the SOC, identification information for identifying the electric vehicle M or the user U during charging, information about whether the charging facility 300 is normal or abnormal, and the like. Also, the information about the usage situation may include reservation information of the charging facility 300. Also, the charging controller 360 may perform control so that electric power is not supplied even if an electric vehicle M other than an electric vehicle M related to the reservation is connected to the charging cable CC (in other words, so that an electric vehicle other than a vehicle related to the reservation cannot be charged) on the basis of reservation information. Also, the charging controller 360 may transmit, to the information management device 400, information indicating that the charging of the electric vehicle M has been started (for example, information indicating that the charging cable CC has been connected to the charging port 70 of the electric vehicle M, or that supply of electric power to the battery 40 has been started). Also, the charging controller 360 may transmit the charging performance information of the charging facility 300 to the information management device 400. The charging performance information of the charging facility 300 includes, for example, information about an amount of electric power that can be supplied, a standard, a type of target vehicle that can be charged, a manufacturing date of the charging facility, and the like.

### [Information management device]

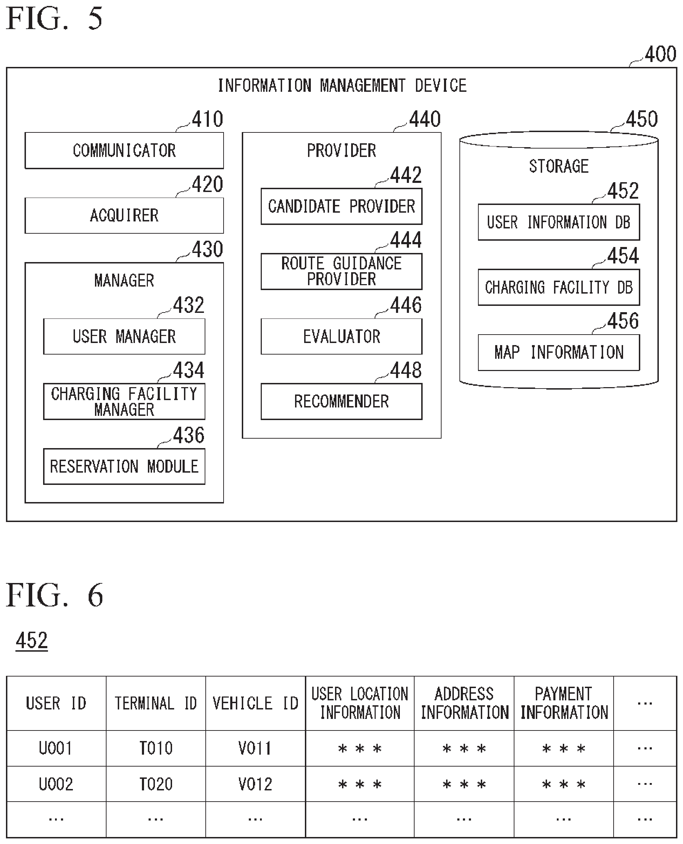

FIG. 5 is a configuration diagram of the information management device 400 of the embodiment. The information management device 400 includes, for example, a communicator 410, an acquirer 420, a manager 430, a provider 440, and a storage 450. The acquirer 420, the manager 430, and the provider 440 are implemented, for example, by a hardware processor such as a CPU executing the program (software). Also, some or all of these components may be implemented by hardware (including a circuit; circuitry) such as an LSI circuit, an ASIC, an FPGA, or a GPU or may be implemented by software and hardware in cooperation. The program may be pre-stored in a storage device (a storage device including a non-transitory storage medium) such as an HDD or a flash memory provided in the information management device 400 or may be stored in a removable storage medium (a non-transitory storage medium) such as a DVD of a CD-ROM and installed in the HDD or the flash memory provided in the information management device 400 when the storage medium is mounted in a drive device provided in the information management device 400.

The storage 450 may be implemented by the various types of storage devices described above, an SSD, an EEPROM, a ROM, a RAM, or the like. The storage 450 stores, for example, a user information database (DB) 452, a charging facility DB 454, map information 456, programs, and various other types of information. The charging facility DB 454 is an example of "charging facility information."

FIG. 6 is a diagram showing an example of content of the user information DB 452. The user information DB 452 includes, for example, a user ID, a terminal ID, a vehicle ID, user location information, address information, and payment information. The user ID is identification information for identifying the user U. Also, information for performing user authentication (for example, a password, biometric information, and the like) may be stored in the user ID. The terminal ID is identification information for identifying the communication terminal 200 used by the user U. The vehicle ID is identification information for identifying the electric vehicle M used by the user U. The user location information is location information of the communication terminal 200 or location information of the electric vehicle M. The address information is address information for the information management device 400 to communicate with the communication terminal 200 and the electric vehicle M. The payment information is information about a payment method (for example, credit card payment or electronic money payment) when the user U pays a usage fee after using a service (for example, a navigation service) of the embodiment or the charging facility 300. Also, the payment information may include whether or not the payment has been completed, a payment date, a payment amount, and the like.

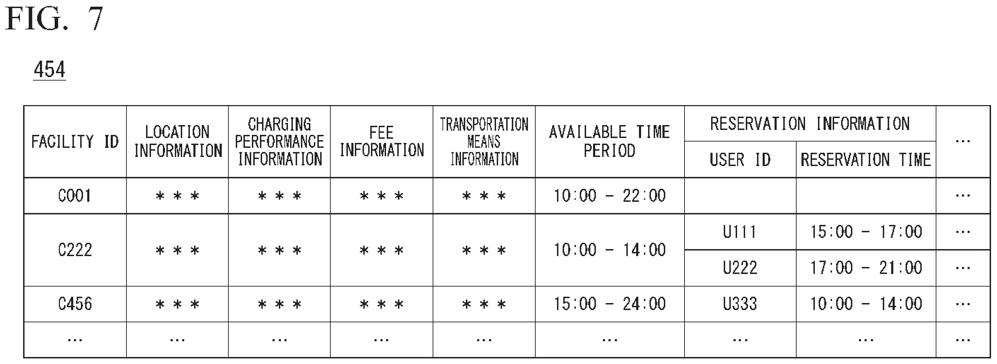

FIG. 7 is a diagram showing an example of content of the charging facility DB 454. The charging facility DB 454 includes, for example, a facility ID, location information, charging performance information, fee information, transportation means information, an available time period, and reservation information. The facility ID is identification information for identifying the charging facility 300. The location information is location information of the charging facility 300. The performance information includes information about an amount of electric power that can be supplied to the charging facility 300, a standard, a type of target vehicle that can be charged, a manufacturing date of the charging facility, and the like. The fee information is information about a usage fee of the charging facility 300. Also, the usage fee may include fares for public transportation when other paid public transportation facilities such as buses are used in movement from the charging facility to the destination. The transportation means information is, for example, information about a means of transportation located within a prescribed distance based on the location information of the charging facility 300. Examples of the means of transportation include buses and trains. Also, information about the means of transportation includes information about locations of bus stops and stations, route information (for example, location information of each stop and a travel time in each stop section), fares for the means of transportation, timetables, and the like. Also, the transportation means information may include information indicating whether or not it is possible to move on foot. As the available time period, a time period during which the charging facility 300 is available is set. Also, the reservation information is reservation information for the charging facility 300. The reservation information includes information about the user ID and the reservation time.

Here, the charging facility DB 454 is generated or updated on the basis of, for example, information transmitted from the charging facility 300 or communication terminals (for example, a PC, a smartphone, and the like) used by an administrator (including an owner or the like) who manages the charging facility 300. Also, the information management device 400 may set the fee infonnation of the charging facility DB 454 in accordance with, for example, a usage situation of the charging facility 300, a degree of congestion, the presence or absence of events in the vicinity of the charging facility, and the like.

The map information 456, for example, stores information similar to the map information 142 and 274 described above. Furthermore, the map information 456 may store the above-described transportation means information corresponding to latitude and longitude information. For example, the map information 456 includes, in addition to route guidance information for vehicles, route guidance information for walking, and route guidance information using public transportation such as buses and trains.

The communicator 410 communicates with the electric vehicle M, the communication terminal 200, the charging facility 300, and other external devices via the network NW. For example, the communicator 410 receives location information, information about a destination, information about an estimated time of arrival at the destination, and the like from the electric vehicle M or the communication terminal 200. Also, the communicator 410 transmits information about candidates for the charging facility 300 where the electric vehicle M is available while the user U is staying at the destination, information about a reservation of the charging facility 300, and the like to the electric vehicle M, the communication terminal 200, and the charging facility 300.

The acquirer 420 acquires information to be registered in the user information DB 452 and the charging facility DB 454 and information for updating information already registered, on the basis of the information received by the communicator 410. Also, the acquirer 420 acquires the location information of the user U (location information of the electric vehicle M or the communication terminal 200), destination information, and information about the estimated time of arrival at the destination. The destination information may include information about the stay period of time at the destination in addition to information about the location of the destination. The stay period of time is set, for example, by the user U. Also, the stay period of time may be estimated by the acquirer 420 from previous history information of the user U, and may be set in accordance with the purpose of stay at the destination preset by the user U (for example, work, leisure, sightseeing, or other errands).

Also, the acquirer 420 acquires an instruction for switching the route guidance information from the electric vehicle M or the communication terminal 200. Also, the acquirer 420 may acquire charging performance information and information about the state of the battery 40 from the electric vehicle M. Also, the acquirer 420 may acquire the charging performance information from the charging facility 300. The information may be provided to the user U by the provider 440.

The manager 430 includes, for example, a user manager 432, a charging facility manager 434, and a reservation module 436. The user manager 432 registers user information in the user information DB 452 or the like, updates or deletes registered data, and the like. Also, the user manager 432 may perform a process such as user authentication when a service provided by the information management device 400 is used. **In** this case, the user manager 432 receives information such as a user ID, a password, and biometric information from the user U. determines whether or not there is matching user information with reference to the user information DB 452, allows the use of the service when there is matching user information, and prohibits the use of the service or causes information for prompting the user U to perform a new registration process to be output when there is no matching user information. Also, when new registration information has been received, the user manager 432 updates the user information DB 452 on the basis of the received new registration information.

The charging facility manager 434 manages a usage situation of the charging facility 300 and the like. The charging facility manager 434 updates the charging facility DB 454, for example, on the basis of the usage situation received at a prescribed cycle from the charging facility 300 acquired by the acquirer 420, a reservation instruction from the user U, and the like.

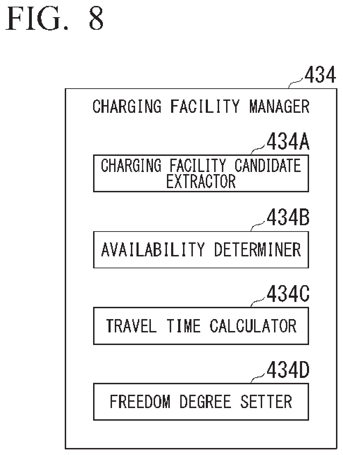

FIG. 8 is a configuration diagram of the charging facility manager 434 of the embodiment. The charging facility manager 434 includes, for example, a charging facility candidate extractor 434A, an availability determiner 434B, a travel time calculator 434C, and a freedom degree setter 434D. The charging facility candidate extractor 434A extracts a charging facility candidate at which the electric vehicle can arrive within a prescribed distance from the destination or within a prescribed period of time. For example, the charging facility candidate extractor 434A refers to the charging facility DB 454 on the basis of destination information, information about an estimated time of arrival, and the like from the user U and extracts a charging facility candidate at which the electric vehicle can arrive within a prescribed distance from the destination or within a prescribed period of time.

The availability determiner 434B determines whether or not the charging facility candidate extracted by the charging facility candidate extractor 434A is available in a prescribed period of time set on the basis of the estimated time of arrival. For example, the availability determiner 434B determines that the extracted charging facility candidate is available when the extracted charging facility candidate is vacant from a time that is carlicr than the estimated time of arrival by a prescribed period of time (or there is no reservation) with reference to the available time period for each charging facility candidate and determines that the extracted charging facility candidate is unavailable when the extracted charging facility candidate is not vacant. Also, the prescribed period of time may be a period of time corresponding to a travel time (for example, a walking travel time) of the user U from the charging facility 300 to the destination, or a fixed period of time (for example, about 5 to 15 minutes).

Also, the availability determiner 434B may acquire a stay period of time at the destination and refer to the available time period for each charging facility candidate to determine that the charging facility candidate is available when a time period including the stay period of time at the destination from the estimated time of arrival is included in the available time period and determine that the charging facility candidate is unavailable when the time period including the stay period of time at the destination from the estimated time of arrival is not included in the available time period.

Also, in addition to (or instead) the above-described conditions, the availability determiner 434B may determine that the charging facility candidate is available if charging of the battery 40 is completed (or when the charging rate is greater than or equal to the threshold value) until the stay period of time elapses from the estimated time of arrival and determine that the charging facility candidate is unavailable if charging is not completed until the stay period of time elapses from the estimated time of arrival. In this case, the availability determiner 434B predicts a period of time (a charging period of time) until charging is completed using an SOC and charging performance information of the battery 40 of the electric vehicle M and the charging performance information of the charging facility candidate and determines whether or not the charging of the battery 40 has been completed according to whether or not a time at which the charging period of time has elapsed from the estimated time of arrival is included in an available charging time period. Thereby, the more appropriate availability determination can be made on the basis of a more accurate charging period of time.

The travel time calculator 434C calculates a travel time between the charging facility candidate extracted by the charging facility candidate extractor 434A and the destination. For example, the travel time calculator 434C acquires a route from the location of the charging facility candidate to the destination with reference to the map information 456 and calculates a walking travel time on the basis of a distance in the acquired route and a walking speed of the user U. The walking speed may be a prescribed speed, a speed set by the user U, or a speed set on the basis of a previous walking speed of the user U (for example, an average speed). Also, the travel time calculator 434C may refer to the transportation means information of the charging facility DB 454 and calculate a travel time for each means of transportation when there are means of transportation other than walking as a means of transportation from the charging facility candidate to the destination. For example, in the case of moving a distance corresponding to two stops by train from a charging facility candidate to a destination, the travel time calculator 434C acquires the travel time in the case of moving the distance corresponding to the two stops by train. Also, the travel time calculator 434C may calculate a travel time including a waiting period of time and the like until the user gets in or on the means of transportation with reference to a timetable or the like.

The freedom degree setter 434D sets a degree of freedom of the stay period of time at the destination. The degree of freedom is an index value indicating the tolerance of error that is a period of time greater than the stay period of time. For example, in a case where the stay period of time at the destination is 3 hours, the degree of freedom is lower when it is closer to 3 hours and the degree of freedom is higher when it is longer than 3 hours. The degree of freedom may be set by the user U, may be set in accordance with the length of the stay period of time, and may be set in accordance with the purpose of stay at the preset destination (for example, work, leisure, sightseeing, and other errands). For example, as the degree of freedom increases, the charging facility candidate extractor 434A may increase a distance (a prescribed distance) from the destination that is a reference for extracting the charging facility candidate and may increase a travel time (a prescribed period of time) from the destination. Thereby, charging facility candidates close to the destination are extracted when the degree of freedom is low and charging facility candidates including a charging facility away from the destination are extracted when the degree of freedom is high. Thus, a charging facility candidate suitable for the user U can be extracted in accordance with the degree of freedom of the stay period of time at the destination.

Returning to FIG. 5, the reservation module 436 reserves the charging facility 300. For example, the reservation module 436 reserves the selected chargi ng facility 300 when the user U has selected any one of the charging facility candidates provided to the user U. Also, the reservation module 436 updates the charging facility DB 454 on the basis of the reservation information. Also, the reservation module 436 generates information about a location or a route of the reserved charging facility 300 with reference to the map information 456 and provides the generated information and the reservation information to the user U. Also, the reservation module 436 transmits the reservation information to the reserved charging facility 300 and may cause the charging facility 300 to perform control for preventing a vehicle other than the user (the electric vehicle M) related to the reservation in the time period in which the reservation is made from being charged. By making a reservation through the reservation module 436, the burden on the user U can be further reduced.

The provider 440 provides the user U with at least one of a distance between a destination and a charging facility candidate determined to be available among charging facility candidates and a travel time of the user U of the electric vehicle M and location information of the charging facility candidate on the basis of destination information about the destination, an estimated time of arrival at the destination, and an available time period. The provider 440 includes, for example, a candidate provider 442, a route guidance provider 444, an evaluator 446, and a recommender 448. The candidate provider 442 provides the user U with information about charging facility candidates extracted by the charging facility manager 434. For example, the candidate provider 442 transmits at least one of the distance between the destination and the charging facility candidate determined to be available by the availability determiner 434B among the charging facility candidates and the travel time of the user and the location information of the charging facility candidate to the electric vehicle M or the communication terminal 200, thereby providing the information to the user U. Also, the candidate provider 442 may provide the user U with a usage fee for each charging facility candidate in addition to the above-described information.

For example. the candidate provider 442 determines that the user U is located inside the electric vehicle M (that is, the user U is in the electric vehicle M) when a distance between the electric vehicle M and the communication terminal 200 is within a predetermined distance on the basis of location information of the electric vehicle M and the communication terminal 200 acquired by the acquirer 420 and provides the above-described information about the charging facility candidates to the electric vehicle M. On the other hand, when the distance between the electric vehicle M and the communication terminal 200 is greater than the predetermined distance, the candidate provider 442 determines that the user U is not in the electric vehicle M, and provides information about the charging facility candidates to the communication terminal 200. Also, the candidate provider 442 may transmit information about the charging facility candidates to the electric vehicle M or the communication terminal 200 having transmitted the destination information to the information management device 400, or may transmit the information to the one preset in advance by the user U.

Also, the candidate provider 442 may provide the user U with information about a state of the battery 40 acquired by the acquirer 420. Also, the candidate provider 442 may provide the user U with charging performance information indicating charging performance of the battery 40 acquired by the acquirer 420 or may provide the user U with charging performance information indicating the charging performance of the charging facility 300. Also, the candidate provider 442 may provide the user U with information such as a charging start time or a charging end time (estimated end time) of the battery 40 acquired by the acquirer 420. Thereby, the user U can be allowed to more accurately ascertain a period of time required for charging and an end time.

The route guidance provider 444 generates route guidance information to be provided to the electric vehicle M or the communication terminal 200 on the basis of location information of the electric vehicle M or location information of the communication terminal 200, location information of the charging facility 300, and location information of the destination. The route guidance information includes, for example, map information from a current location to the charging facility 300 or the destination, route information, driving instruction information of right and left turns and the like, guidance information of a recommended lane, and the like.

For example, when information indicating that charging of the battery 40 has started is not acquired from the charging facility 300 selected by the user U among the charging facility candidates, the route guidance provider 444 provides guidance information from the location of the electric vehicle M to the charging facility 300 to the electric vehicle M. The information indicating that the charging of the battery 40 has started is, for example, information indicating that the charging cable CC (the second plug P2) has been detected as being connected to the charging port 70 of the electric vehicle M, or information indicating that the supply of electric power from the charging facility 300 to the battery 40 has been detected as having started. Such information may be acquired from the electric vehicle M or may be acquired from the charging facility 300. The first route guidance information is, for example, information for guiding the electric vehicle M along a route of roads on which the electric vehicle M can travel.

Also, when the information indicating that the charging of the battery 40 has started is acquired, the route guidance provider 444 provides second route guidance information from a current location of the communication terminal 200 to the destination to the communication terminal 200. The second route guidance information is, for example, information for guiding the user U along a route of roads on which the user U can move on foot or the like (including a route passing through stairs and the like), or a route along which the user U can move by public transportation. Accordingly, the second route guidance information includes information about a nearest station (or bus stop) of a nearby train (or bus), names of stations or bus stops near the destination, timetables, fares for trains or buses, in-vehicle times, and the like.

Thereby, for example, when the electric vehicle M has not arrived at the charging facility 300 and information indicating that the charging of the battery 40 has started is not acquired, the route guidance provider 444 can implement appropriate route guidance for moving to the charging facility 300 by providing the first route guidance information. Also, when the user U moves to the destination in a state in which the electric vehicle M is stopped at the charging facility 300 (in a charged state) after the provision of the first route guidance information, the route guidance provider 444 can provide more appropriate route guidance information by switching the guidance information at a more appropriate timing so that the route guidance information is switched to the second route guidance information for movement by walking or using another means of transportation and the second route guidance information is provided.

Also, the route guidance provider 444 may provide the first route guidance information to the communication terminal 200 instead of the electric vehicle M. The electric vehicle M and the communication terminal 200 by which the information is received may be preset by the user U or the setting of the destination by the user U and the selection of the charging facility 300 may be decided according to whether they are performed on the electric vehicle M or on the communication terminal 200.

Also, instead of (or in addition to) acquiring the above-described information indicating that the charging of the battery 40 has started, when it is determined that the electric vehicle M has continuously stopped at the charging facility 300 for a predetermined time or longer (within a predetermined distance from the location of the electric vehicle M), the route guidance provider 444 may provide the communication terminal 200 with the second route guidance information for moving to the destination.

For example, in a situation where the first route guidance information is being provided to the communication terminal 200, and thereafter the electric vehicle M has stopped at the charging facility 300 for a predetermined time or longer, the route guidance provider 444 estimates that the user U has parked the electric vehicle M at the charging facility 300 and is moving on foot or the like, and switches the route guidance information to be provided to the communication terminal 200 from the first route guidance information to the second route guidance information. Also, the route guidance provider 444 causes the communication terminal 200 to provide continued route guidance using the second route guidance information after the switching. Thereby, the route guidance information can be smoothly switched and provided to the user U.

Also, the route guidance provider 444 may switch the route guidance information to be provided to the communication terminal 200 when the distance between the electric vehicle M and the communication terminal 200 becomes equal to or greater than a predetermined distance in a state in which the electric vehicle M remains continuously stopped at the charging facility 300 for a predetermined time or longer. Thereby, it is possible to more accurately determine that the user U has moved away from the electric vehicle M, and to provide the second route guidance information at a more appropriate timing. In place of (or in addition to) switching when the distance between the electric vehicle M and the communication terminal 200 becomes equal to or greater than a prescribed distance, the route guidance provider 444 may switch the route guidance information to be provided to the communication terminal 200 when a distance between the communication terminal 200 and the destination becomes equal to or shorter than a prescribed distance. Thereby, it is possible to ascertain that the user U is heading toward the destination (without heading toward a location other than the destination for another purpose), and to more appropriately switch the route guidance information.

Also, when the user U returns from the destination to the charging facility 300 (for example, when a distance between the charging facility 300 and the communication terminal 200 becomes equal to or greater than a prescribed distance), the route guidance provider 444 may generate third route guidance information and provide the generated third route guidance information to the communication terminal 200. Like the second route guidance information, the third route guidance information is, for example, information for guiding the user U along a route of roads on which the user U can move on foot or the like, or a route along which the user U can move using public transportation.

Also, if the third route guidance information is provided, the route guidance provider 444 may acquire a means of transportation used by the user U when the user U moves from the charging facility 300 to the destination (in other words, a movement situation of the user U when the second route guidance information is provided), and may preferentially provide route guidance using a means of transportation identical to the acquired means of transportation over other route guidance. The means of transportation used when the user U moves from the charging facility 300 to the destination may be acquired, for example, by inquiring of the user U before providing the third route guidance information, or may be predicted from a movement trajectory, a movement speed, or the like of the communication terminal 200 when the user U moves from the charging facility 300 to the destination. Also, preferentially providing includes, for example, enlarging text, changing colors to emphasize a display, displaying the route guidance at a higher rank than other route guidance, and the like. Thereby, when movement to the destination is on foot, because a walking route can be output with higher priority than a bus route or the like, it is possible to preferentially provide route guidance information that is highly likely to be actually used when returning from the destination to the charging facility 300.

Also, when a route information switching instruction from the user U is received (acquired by the acquirer 420), the route guidance provider 444 may switch the route guidance information between the first route guidance information and the second route guidance information and provide the switched information. Thereby, route guidance information desired by the user U can be provided in accordance with an operation by the user U.

The evaluator 446 evaluates the charging facility candidate. For example, for each charging facility candidate, the evaluator 446 makes an evaluation using at least one of the following criteria: the usage fee of the charging facility candidate, the distance between the charging facility candidate and the destination, the travel time from the charging facility candidate to the destination, and the charging performance information of the charging facility candidate. For example, as a first evaluation, the evaluator 446 assigns a higher evaluation level to a charging facility candidate having a lower usage fee among the charging facility candidates. Also, as a second evaluation, the evaluator 446 assigns a higher evaluation level to a charging facility candidate closer to the destination. Also, as a third evaluation, the evaluator 446 assigns a higher evaluation level to a charging facility candidate from which a period of time of movement to the destination is shorter. The above-described travel time may be entirely a walking travel time or may be a travel time including the use of the means of transportation. Also, as a fourth evaluation, the evaluator 446 assigns a higher evaluation level to a charging facility candidate having higher performance. For example, the performance level is higher when the manufacturing date of the charging facility 300 is more recent, the amount of electric power that can be supplied for a prescribed period of time is larger, or the type of vehicle that can be charged is larger.

The evaluator 446 evaluates each charging facility candidate using at least one of the first to fourth evaluations. Also, the evaluator 446 may perform an evaluation process with criteria of evaluations other than the first to fourth evaluations. When an evaluation process is performed using a plurality of evaluations, the evaluator 446 may make a final evaluation using an average value or a total value of the evaluations. Also, the evaluator 446 may ask the user U about evaluation criteria for making the evaluation and may make the evaluation using the evaluation criteria selected by the user U. Thereby, it is possible to provide information about charging facility candidates evaluated by the evaluation criteria desired by the user U.

When a notification of a charging facility candidate is provided to the user U, the recommender 448 provides information about a recommended charging facility candidate on the basis of an evaluation result of the evaluator 446. For example, the recommender 448 recommends a charging facility candidate having a highest evaluation level among the evaluated charging facility candidates to the user U as a recommended charging facility. Also, the recommender 448 may recommend a charging facility candidate having an evaluation value larger than or equal to a threshold value to the user U. Also, when a route to a charging facility candidate is provided, the recommender 448 may provide a route to a recommended charging facility to the user U as a reccommended route. Thus, by recommending a highly evaluated charging facility candidate to the user U, it is possible to make it easier for the user U to select a more appropriate charging facility 300 or a more appropriate travel route while reducing the time and effort to select.

Also, when the charging rate of the electric vehicle M is greater than or equal to the threshold value, the recommender 448 may recommend to the user U that it is not necessary to perform charging during the stay period of time at the destination. Thereby, it is possible to suppress the execution of unnecessary charging and a more appropriate suggestion can be provided to the user U.

### [Provision of information about charging facilities]

Next, an example in which information about the charging facility is provided in the embodiment will be specifically described. Hereinafter, an example in which information about the charging facility 300 is provided to the communication terminal 200 of the user U using the electric vehicle M will be described, but the information may be provided to the electric vehicle M instead of (or in addition to) the communication terminal 200.

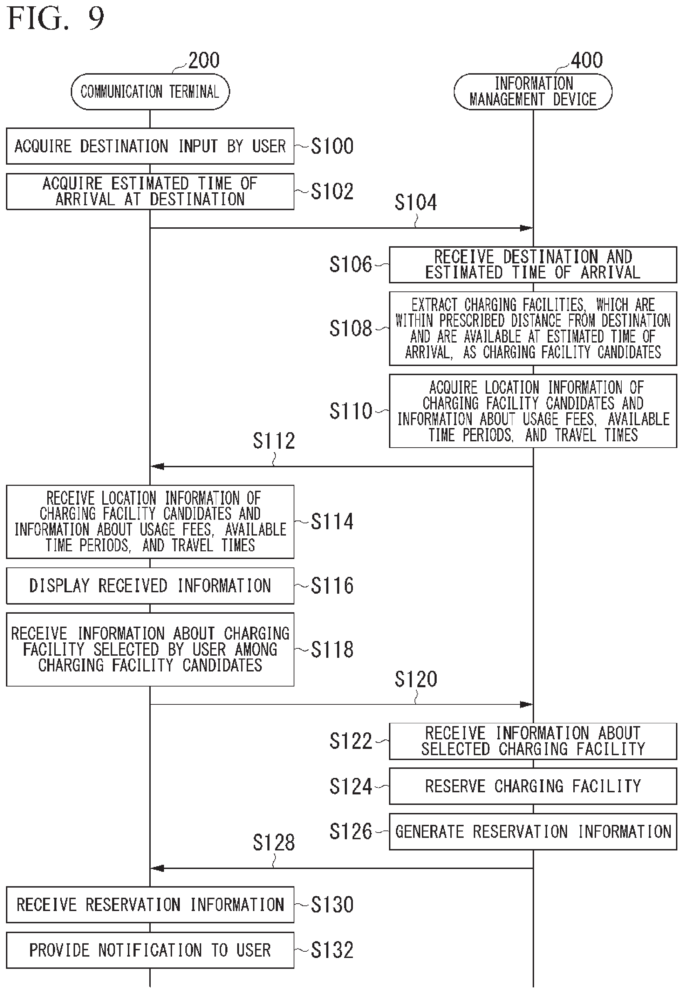

FIG. 9 is a sequence diagram showing an example of a process for providing information about a charging facility. In the example of FIG. 9, a process between the communication terminal 200 and the information management device 400 is shown. Also, in the stage before the process of FIG. 9 is executed, it is assumed that the latest usage situation of cach charging facility 300 is managed by the information management device 400. Also, the process of the communication terminal 200 side to be described below is mainly implemented by executing the navigation application 272.

In the example of FIG. 9, the communication terminal 200 stores a destination input by the user U (step S100). Subsequently, the communication terminal 200 refers to the map information 274, acquires a route from the current location of the communication terminal 200 to the destination, and calculates an estimated time of arrival at the destination from the acquired route and the current time (step S102). Subsequently, the communication terminal 200 transmits destination information and information about the estimated time of arrival to the information management device 400 (step S104). The destination information may include information about a stay period of time at the destination in addition to location information of the destination.

The information management device 400 receives the destination information and information about the estimated time of arrival from the communication terminal 200 (step S106) and extracts charging facilities that are within a prescribed distance from the destination and that are available at the estimated time of arrival as the charging facility candidates (step S108). Subsequently, the information management device 400 acquires location information of the extracted charging facilities and information about a usage fee, an available time period, and a travel time between the charging facility candidate and the destination (step S110) and transmits the acquired information (information about the charging facility candidate) to the communication terminal 200 (step S112). Also, in the processing of step S110, information about the usage fee and the available time period may not be included. In contrast, information about a movement distance between the charging facility candidate and the destination and information about a means of transportation may be included.

The communication terminal 200 receives the location information and the information about the usage fees, the available time periods, and the travel times of the charging facility candidates (step S114) and displays the received information on the display 232 (step S116). Subsequently, the communication terminal 200 receives information about a charging facility selected by the user U among the displayed charging facility candidates (step S118). Subsequently, the communication terminal 200 transmits the received information about the charging facility 300 to the information management device 400 (step S120).

The information management device 400 receives the information about the selected charging facility (step S122) and reserves the charging facility indicated in the received information (step S124). Specifically, the information management device 400 updates reservation information of the charging facility DB 454 and updates a time period in which a reservation is made (a prescribed period of time from the estimated time of arrival) to a time period excluded from the available time period. Subsequently, the information management device 400 generates reservation information related to the reserved charging facility (step S126) and transmits the generated reservation information to the communication terminal 200 (step S128).

The communication terminal 200 receives the reservation information (step S130) and notifies the user of the received reservation information (step S132).

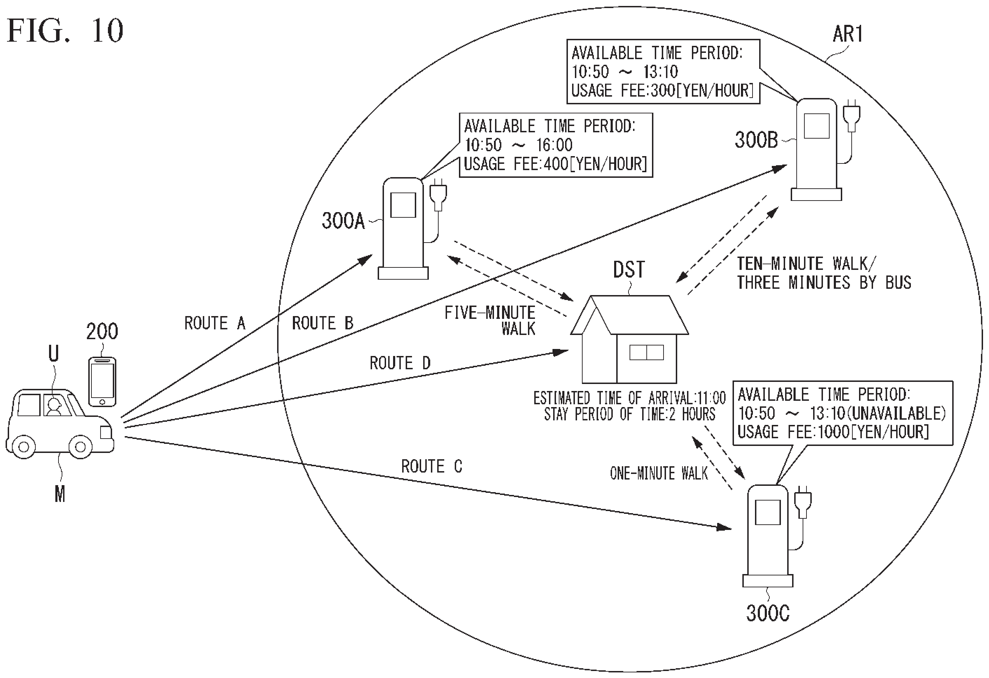

FIG. 10 is a diagram showing an example in which information about the charging facility 300 is provided. In the example of FIG. 10, three charging facilities 300A to 300C located in an area AR1 within a prescribed distance from a destination DST designated by the user U are shown. The information management device 400 acquires the location information of the destination DST and information about an estimated time of arrival (11:00 in the example of FIG. 10) from the communication terminal 200 of the user U in the electric vehicle M. Also, the information management device 400 extracts the charging facilities 300A to 300C located within the prescribed distance (within the area AR1) centered on the location of the destination DST. Furthermore, the information management device 400 acquires information about available time periods of the charging facilities 300A to 300C from the charging facility DB 454 and determines whether or not the charging facility is available from a time close to the estimated time of arrival (including a prescribed time error) on the basis of the acquired information. Also, when the destination information from the communication terminal 200 includes a stay period of time (2 hours in the example of FIG. 10), the information management device 400 may extract a charging facility for completing charging during the stay period of time. In the example of FIG. 10, the charging facilities 300A and 300B are extracted as the charging facility candidates.

The information management device 400 transmits location information of the charging facilities 300A and 300B, which are the charging facility candidates, and information about available time periods, usage fees, and travel times to the communication terminal 200. In this case, the evaluator 446 may evaluate the charging facilities 300A and 300B and transmit a charging facility with a highest evaluation result as a recommended charging facility to the communication terminal 200 through the recommender 448.

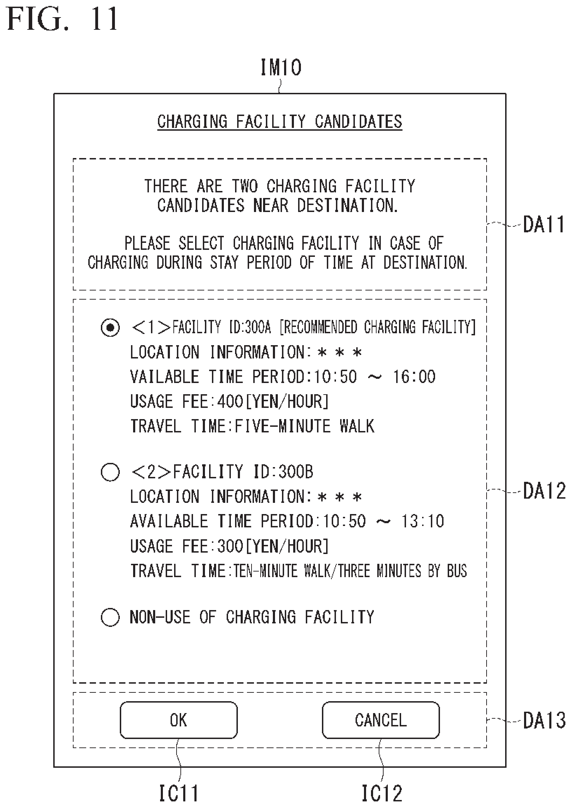

FIG. 11 is a diagram showing an example of an image IM10 related to charging facility candidates displayed on the communication terminal 200. Also, the present invention is not limited to a display mode such as display content or a layout included in the image IM10. The image IM10 is an image showing information about the charging facility candidates. The image IM10 includes, for example, an extraction result display area DA11, a candidate information display area DA12, and a switch display area DA13. In the extraction result display area DA11, information about the number of charging facility candidates (two in the example of FIG. 11) in the vicinity of the destination extracted by the information management device 400 (within a prescribed distance from the destination or having a time of arrival from the destination within a prescribed time) is displayed. Also, in the extraction result display area DA11, information for prompting the user U to select any one of the charging facility candidates may be displayed when charging is performed during the stay period of time at the destination.

In the candidate information display area DA12, identification information of two charging facilities extracted as charging facility candidates and location information, an available time period, a usage fee, and a travel time for each charging facility candidate in the example of FIG. 10 are displayed. The location information may be information about an address and the like, may be map information, and may include route information from the current location of the user U. Also, information about a movement distance from the charging facility to the destination may be displayed in the candidate information display area DA12.

Also, information indicating a charging facility recommended by the recommender 448 may be displayed in the candidate information display area DA12. Although text information indicating the recommended charging facility is displayed in the example of FIG. 11, text indicating the charging facility candidate corresponding to the recommended charging facility is enlarged or emphasized by colors and patterns and various types of cooperative displays such as assigning dedicated marks, images, and icons may be performed instead thereof (or in addition thereto). Also, when a plurality of charging facility candidates are displayed in a list, the recommended charging facilities may be sorted and displayed at the top level. Thereby, the user U can more easily see information about the recommended charging facilities.

Also, in the candidate information display area DA12, a radio button or the like for allowing the user U to select any charging facility may be displayed. Also, in the candidate information display area DA12, content for allowing the user U to select the non-use of the charging facility may be displayed.

The switch display area DA13 includes, for example, an icon IC11 and an icon IC12 that are graphical user interface (GUI) switches. The icon IC11 is a switch (OK switch) for receiving a request for using a charging facility selected by a radio button or the like in the candidate information display area DA12. The icon IC12 is a switch (cancel switch) for accepting the non-use of the charging facility.

When the icon IC11 has been selected by the user U, the communication terminal 200 transmits information about the charging facility selected by the user U using the radio button or the like to the information management device 400. Also, when the icon IC12 has been selected, the communication terminal 200 transmits information indicating that the charging facility included in the charging facility candidates is not used (or reserved) to the information management device 400. Also, instead of (or in addition to) providing the image as shown in FIG. 11 to the communication terminal 200, the information management device 400 may display an image as shown in FIG. 10 on the communication terminal 200 to allow the user U to select any charging facility or destination DST or select any one of routes A to D.

When information about the charging facility (the charging facility 300A in the example of FIG. 11) selected by the user U has been received from the communication terminal 200, the information management device 400 reserves the charging facility indicated in the received information by determining that a reservation instruction has been received from the user U, generates a reservation result and information of a route to the reserved charging facility (the route A shown in FIG. 10) when the reservation has been completed normally and transmits the generated information to the communication terminal 200 to provide the information to the user U. Thereby, the user U can move the electric vehicle M using the charging facility 300A as the destination of the electric vehicle M.

Also, when the non-use of the charging facility has been selected (or when the destination has been selected), the information management device 400 generates route information for the destination (the route D shown in FIG. 10) and transmits the generated information to the communication terminal 200 to provide the information to the user U.

The user U causes the electric vehicle M to travel in accordance with the route to the reserved charging facility (first route guidance information) and performs a procedure to charge the battery after arriving at the charging facility 300. Furthermore, the user U moves to the destination in accordance with second route guidance information (guidance information such as a route and a means of transportation from the charging facility 300 to the destination) presented on the communication terminal 200. An example of a process performed by the route guidance provider 444 will be described below with reference to flowcharts.

### [Route guidance process]

### [First example]

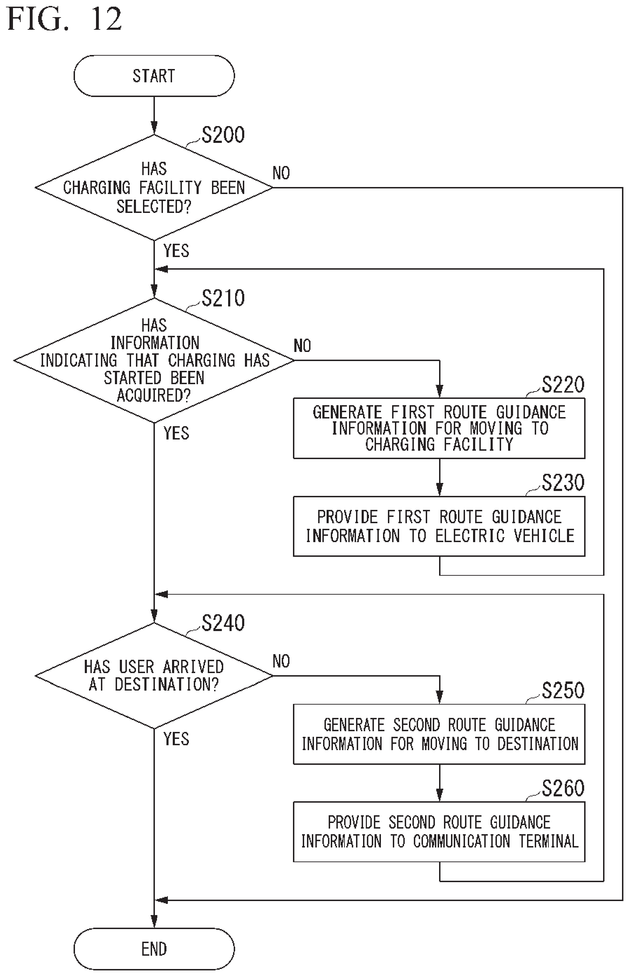

FIG. 12 is a flowchart showing a first example of a route guidance process according to the embodiment. In the example of FIG. 12, the route guidance provider 444 determines whether or not the charging facility 300 has been selected by the user U from among charging facility candidates (step S200). When it is determined that the charging facility 300 has been selected, the route guidance provider 444 determines whether or not information indicating that charging of the battery 40 of the electric vehicle M has been started has been acquired (step S210).

When it is determined that information indicating that charging has started has not been acquired, the route guidance provider 444 generates the first route guidance information from a current location of the electric vehicle M to the charging facility 300 (step S220), provides the generated first route guidance information to the electric vehicle M (step S230), and returns to the processing of step S210. In the processing of step S230, the first route guidance information may be provided to the communication terminal 200.

Also, in the processing of step S210, when it is determined that information indicating that charging has started has been acquired, the route guidance provider 444 determines whether or not the user U has arrived at a destination DST (step S240). For example, the route guidance provider 444 calculates a distance based on a location of the communication terminal 200 of the user U and a location of the destination DST, and determines that the user U has arrived at the destination DST when the calculated distance is less than a prescribed distance, and determines that the user U has not arrived at the destination DST when the distance is equal to or greater than the prescribed distance.

When it is determined that the user U has not arrived at the destination DST, the route guidance provider 444 generates the second route guidance information from a current location of the communication terminal 200 to the destination DST (step S250), provides the generated second route guidance information to the communication terminal 200 (step S260), and returns to the processing of step S240.

Also, when it is determined that the user U has arrived at the destination DST in the processing of step S240, the process of the present flowchart ends. Also, when it is determined that no charging facility has been set in the processing of step S200, the process of the present flowchart ends. Also, when no charging facility is set and only the destination DST is set, the route guidance provider 444 may generate the first route guidance information from the current location of the electric vehicle M or the communication terminal 200 to the destination DST, and provide the generated information to the electric vehicle M or the communication terminal 200.

### [Second example]

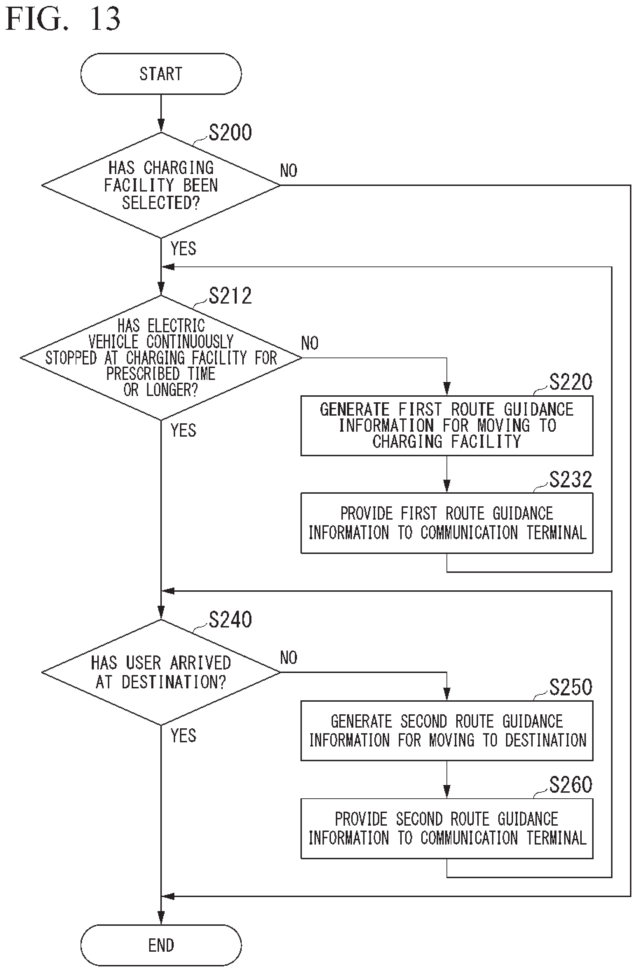

FIG. 13 is a flowchart showing a second example of the route guidance process according to the embodiment. The second example shown in FIG. 13 is different from the process of steps S200 to S260 of the first example shown in FIG. 12 in that steps S212 and S232 are performed instead of steps S210 and S230. Accordingly, the following description will mainly focus on steps S212 and S232. and descriptions of other processing steps will be omitted.

In the processing of step S200 in FIG. 13, when it is determined that the charging facility 300 has been set, the route guidance provider 444 determines whether or not the electric vehicle M has stopped at the charging facility 300 for a predetermined time or longer (step S212). When it is determined that the electric vehicle M has not stopped at the charging facility for the predetermined time or longer, the route guidance provider 444 generates the first route guidance information from a current location of the electric vehicle M to the charging facility 300 (step S220), provides the generated first route guidance information to the communication terminal 200 (step S232), and returns to the processing of step S212. In addition, in the processing of step S232, the first route guidance information may be provided to the electric vehicle M. When it is determined that the electric vehicle M has continuously stopped at the charging facility 300 for the predetermined time or longer in the processing of step S212, the processing from step S240 is performed.

### [Third example]

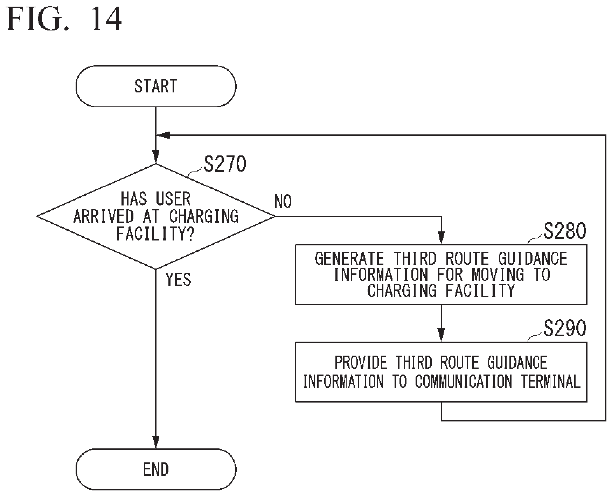

FIG. 14 is a flowchart showing a third example of the route guidance process according to the embodiment. The third example shown in FIG. 14 is a process for providing the third route guidance information when the user U returns from the destination DST to the charging facility 300. In the process of FIG. 14, the route guidance provider 444 determines whether or not the user U has arrived at the charging facility 300 (step S270). In this case, the route guidance provider 444 calculates a distance based on a location of the communication terminal 200 of the user U and a location of the charging facility 300 or the electric vehicle M. determines that the user U has arrived at the charging facility 300 when the calculated distance is less than a prescribed distance, and determines that the user U has not arrived at the charging facility 300 when the distance is equal to or greater than the prescribed distance.

When it is determined that the user U has not arrived at the charging facility 300, the route guidance provider 444 generates the third route guidance information from a current location of the communication terminal 200 to the charging facility 300 (or the electric vehicle M; the same applies hereinalter) (step S280), provides the generated third route guidance information to the communication terminal 200 (step S290), and returns to the processing of step S270. Also, when it is determined that the user U has arrived at the charging facility 300 in the processing of step S270, the process of the present flowchart ends.

In addition, after the user U arrives at the charging facility 300, when a home or the like is set as the destination, the route guidance provider 444 may generate the first route guidance information including the route information for moving to the destination and provide the generated information to the electric vehicle M or the communication terminal 200.

In the embodiment, when a stay time at the destination DST has elapsed, the user U returns to the charging facility 300 and travels by driving the electric vehicle M that has completed charging. In this way, the user U can park the electric vehicle M in the parking area of the charging facility 300A, and while the electric vehicle M is being charged with power supplied from the charging facility 300A, the user U can travel to the destination DST by foot or the like to complete his or her needs.

### [Modified example]

In the above-described embodiment, the estimated time of arrival may be delayed or, conversely, advanced according to a road situation (for example, traffic jams) of the travel route of the electric vehicle M. Therefore, the reservation module 436 of the information management device 400 may perform a process such as updating or canceling reservation details when the estimated time of arrival changes.

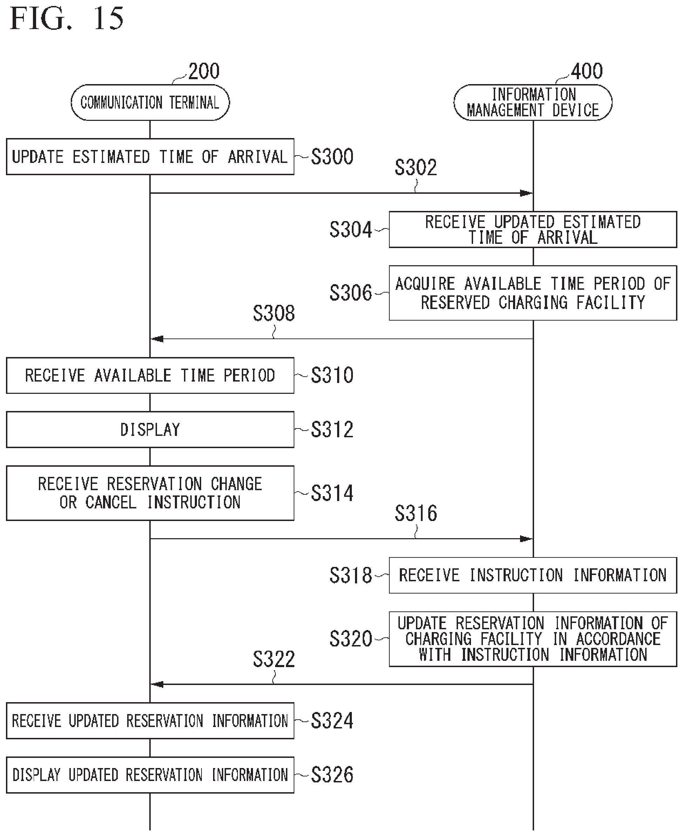

FIG. 15 is a sequence diagram showing an example of a process for updating or canceling reservation details. In the example of FIG. 15, the process shown in FIG. 9 is executed to show the process when there is a reserved charging facility. The process shown in FIG. 15 may be repeatedly executed at a prescribed cycle. In the example of FIG. 15, the communication terminal 200 updates an estimated time of arrival on the basis of a route from a current location of the communication terminal 200 to a destination and a current time (step S300) and transmits the updated estimated time of arrival to the information management device 400 (step S302). In the processing of step S302, reservation information about a reservation that has already been made and information for identifying the user may also be transmitted.

The information management device 400 receives the updated estimated time of arrival or the like (step S304) and acquires an available time period of a reserved charging facility with reference to the charging facility DB 454 (step S306). Also, the information management device 400 transmits information about the acquired available time period of the charging facility to the communication terminal 200 (step S308).

The communication terminal 200 receives the information about the available time period transmitted from the information management device 400 (step S310) and displays the received information about the available time period on the display 232 or the like (step S312). Subsequently, when an instruction for changing or canceling the reservation based on the updated estimated time of arrival has been received from the user U (step S314), the communication terminal 200 transmits information about the received instruction to the information management device 400 (step S316).

The information management device 400 receives the instruction information transmitted from the communication terminal 200 (step S318) and updates the reservation information of the charging facility in accordance with the instruction information (step S320). Subsequently, the information management device 400 transmits the updated reservation information to the communication terminal 200 (step S322).

The communication terminal 200 receives the updated reservation information (step S324) and causes the display 232 to display the reservation information (step S326). In the processing of steps S322 to S326, in addition to the reservation information, information of a route to the reserved charging facility may be included. Thereby, the present sequence process ends. Also, in the processing of step S300, if a difference between the updated estimated time of arrival and the estimated time of arrival when the charging facility 300 is reserved is less than a prescribed period of time, the processing from step S302 may be omitted by determining that there is no reservation change or cancellation. According to the process shown in FIG. 15, even if the estimated time of arrival is changed in accordance with a road situation or the like, the reservation information can be updated with less burden on the user U.

Also, in the embodiment, at least some of the above-described functions of the electric vehicle M and the communication terminal 200 may be provided in the information management device 400 and at least some of the functions of the information management device 400 may be provided in the electric vehicle M and the communication terminal 200. For example, the estimated time of arrival at the destination may be calculated by the information management device 400 instead of being calculated by the electric vehicle M and the communication terminal 200. Also, the first route guidance information and the second route guidance information may be provided from separate devices.

According to the above-described embodiment, the information management device 400 includes: the charging facility candidate extractor 434A configured to extract charging facility candidates that are reachable within a prescribed distance or within a prescribed time from a destination, on the basis of charging facility information including location information of a plurality of charging facilities 300 capable of charging a battery 40 mounted on the electric vehicle M (an example of a mobile object) and available time periods of the charging facilities 300; and the provider 440 configured to provide the user U of the electric vehicle M with at least one of a distance between a charging facility candidate determined to be available among the charging facility candidates and the destination and a travel time of the user U of the electric vehicle M and location information of the charging facility candidate, on the basis of destination information about the destination, an estimated time of arrival at the destination, and the available time periods, wherein the provider 440 provides a charging facility 300 selected by the user U with first route guidance information from a location of the electric vehicle M among the charging facility candidates to the electric vehicle M when information indicating that charging of the battery 40 has started at the charging facility 300 is not acquired and provides the communication terminal 200 with second route guidance information for moving to the destination 200 used by the user U when information indicating that charging of the battery 40 has started is acquired, whereby it is possible to provide the user with more appropriate route guidance information.

For example, according to the embodiment, on the basis of an estimated value of a required time at a destination set by the user U. charging facility candidates can be extracted based on a distance from a charging facility to the destination, a time of arrival at the destination via a charging facility candidate, a period of time during which charging can be performed within the required time, and a price, and information thereof can be provided to the user U to allow the user U to select a charging facility. Therefore, for example, when the user U stops by the charging facility 300 before the destination and heads toward the destination while charging at the charging facility 300, route guidance for moving to the destination can be switched from vehicle-based route guidance (first route guidance information) to user-based route guidance (second route guidance information) and the user-based route guidance (second route guidance information) can be provided. Thereby, seamless route guidance information can be provided not only when the user U is driving the electric vehicle M, but also when the user U gets out of the electric vehicle M and moves by other means such as walking or taking a bus.

Also, according to the embodiment, when information indicating that charging of the electric vehicle M has started is acquired, or when the electric vehicle M has continuously stopped at a charging facility for a predetermined time or longer, it is possible to recognize that the electric vehicle M has arrived at the charging facility and to automatically switch route guidance for the user U.

For example, according to an embodiment, a more appropriate optimum charging facility candidate can be provided to the user U in consideration of the estimated time of arrival at the destination. Also, according to the embodiment, when information about the destination is input by the user U, it is possible to provide information of a charging facility near the destination for enabling the user U to charge the electric vehicle M during the stay period of time at the destination as well as the route for moving directly to the destination. Therefore, two plans, i.e., a plan to go directly to the destination with the electric vehicle M without charging and a plan to move to the destination and spend a stay period of time in a state in which the electric vehicle M has been charged at the charging facility, are provided to the user U. Therefore, the user U can select an appropriate plan corresponding to a situation. Also, according to the embodiment, because the user U can stay at the destination away from the electric vehicle M without waiting at the charging facility 300 until charging is completed, it is possible to effectively make use of time without calculating the departure time in consideration of a travel period of time of a route added to pass through the charging facility and a charging period of time.

The embodiment described above can be represented as follows.

An information management device including:
a storage medium storing computer-readable instructions; and
a processor connected to the storage medium, the processor executing the computer-readable instructions to:
   extract charging facility candidates that are reachable within a prescribed distance or within a prescribed time from a destination, on the basis of charging facility information including location information of a plurality of charging facilities capable of charging a battery mounted on a mobile object and available time periods of the charging facilities;
   provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods;
   provide the mobile object with first route guidance information from a location of the mobile object to a charging facility selected by the user among the charging facility candidates when information indicating that charging of the battery has started at the charging facility is not acquired; and
   provide a communication terminal used by the user with second route guidance information for moving to the destination when information indicating that charging of the battery has started is acquired.

The embodiment described above can be represented as follows.

An information management device including:
a storage medium storing computer-readable instructions; and
a processor connected to the storage medium, the processor executing the computer-readable instructions to:
   extract charging facility candidates that are reachable within a prescribed distance or within a prescribed time from a destination, on the basis of charging facility information including location information of a plurality of charging facilities capable of charging a battery mounted on a mobile object and available time periods of the charging facilities;
   provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods;
   provide a communication terminal used by the user with first route guidance information from a location of the mobile object to the charging facility when it is determined that the mobile object has not continuously stopped at the charging facility for a prescribed time or longer; and
   provide the communication terminal with second route guidance information for moving to the destination when it is determined that the mobile object has continuously stopped at the charging facility for the prescribed time or longer.

Although modes for carrying out the present invention have been described using embodiments, the present invention is not limited to the embodiments and various modifications and substitutions can also be made without departing from the scope and spirit of the present invention.

### REFERENCE SIGNS LIST

1 Information management system
20 Vehicle sensor
36, 250 Controller
40 Battery
42 Battery sensor
90 Navigation device
100 Control device
110, 360 Charging controller
120 Communication controller
130 Display controller
140 Vehicle-side storage
200 Communication terminal
210 Terminal-side communicator
220, 320 Input
230, 330 Output
232, 332 Display
234, 334 Speaker
240, 340 Location acquirer
260 Application executor
270 Terminal-side storage
300 Charging facility
350 Power supplier
400 Information management device
410 Communicator
420 Acquirer
430 Manager
432 User manager
434 Charging facility manager
434A Charging facility candidate extractor
434B Availability determiner
434C Travel time calculator
434D Freedom degree setter
436 Reservation module
440 Provider
442 Candidate provider
444 Route guidance provider
446 Evaluator
448 Recommender
M Electric vehicle

## Claims

1. An information management device comprising:
a charging facility candidate extractor configured to extract charging facility candidates that are reachable within a prescribed distance or within a prescribed time from a destination, on the basis of charging facility information including location information of a plurality of charging facilities capable of charging a battery mounted on a mobile object and available time periods of the charging facilities; and
a provider configured to provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods,
wherein the provider provides the mobile object with first route guidance information from a location of the mobile object to a charging facility selected by the user among the charging facility candidates when information indicating that charging of the battery has started at the charging facility is not acquired and provides a communication terminal used by the user with second route guidance information for moving to the destination when information indicating that charging of the battery has started is acquired.

2. An information management device comprising:
a charging facility candidate extractor configured to extract charging facility candidates that arc reachable within a prescribed distance or within a prescribed time from a destination, on the basis of charging facility information including location information of a plurality of charging facilities capable of charging a battery mounted on a mobile object and available time periods of the charging facilities; and
a provider configured to provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods,
wherein the provider provides a communication terminal used by the user with first route guidance information from a location of the mobile object to the charging facility when it is determined that the mobile object has not continuously stopped at the charging facility for a prescribed time or longer and provides the communication terminal with second route guidance information for moving to the destination when it is determined that the mobile object has continuously stopped at the charging facility for the prescribed time or longer.

3. The information management device according to claim 2, wherein, when information indicating that charging of the battery at the charging facility has started is acquired, the provider provides the communication terminal with the second route guidance information for moving to the destination.

4. The information management device according to claim 1 or 2, wherein, when a route information switching instruction is received from the user, the provider switches the route guidance information between the first route guidance information and the second route guidance information.

5. The information management device according to claim 1 or 2, further comprising a travel time calculator configured to calculate a travel time of the user on the basis of a distance between the charging facility candidate and the destination.

6. The information management device according to claim 1 or 2, wherein the destination information includes information about a stay time of the user at the destination.

7. The information management device according to claim 6, wherein the provider provides the user with information about a charging facility candidate at which charging of the battery is completed during a period until the stay time elapses from the estimated time of arrival among the charging facility candidates.

8. The information management device according to claim 1 or 2, wherein the provider provides the user with information about a state of the battery or charging performance information indicating charging performance of the battery.

9. The information management device according to claim 1 or 2, further comprising a reservation module configured to reserve a charging facility selected by the user from among the charging facility candidates,
wherein the reservation module provides the user with information about available time periods of the reserved charging facility when the estimated time of arrival is updated, and updates or cancels reservation details in accordance with an instruction from the user.

10. The information management device according to claim 1 or 2,
wherein the provider includes:
an evaluator configured to evaluate the charging facility candidates; and
a recommender configured to recommend a recommended charging facility to the user on the basis of evaluation results of the charging facility candidates evaluated by the evaluator,
wherein the evaluator evaluates each charging facility candidate using at least one criterion among a usage fee of the charging facility candidate, a distance between the charging facility candidate and the destination, a travel time from the charging facility candidate to the destination, and charging performance information of the charging facility candidate, and
wherein the recommender recommends, as the recommended charging facility, a charging facility candidate having a highest evaluation among the evaluated charging facility candidates.

11. The information management device according to claim 1 or 2, further comprising a freedom degree setter configured to set a degree of freedom of a stay time at the destination,
wherein the charging facility candidate extractor increases the prescribed distance or the prescribed time as the degree of freedom set by the freedom degree setter increases.

12. The information management device according to claim 1 or 2,
wherein the first route guidance information is guidance information for a route along which the mobile object is movable, and
wherein the second route guidance information indicates a route along which the user is able to move or a route along which the user is able to move using public transportation.

13. An information management method comprising:
extracting, by a computer, charging facility candidates that are reachable within a prescribed distance or within a prescribed time from a destination, on the basis of charging facility information including location information of a plurality of charging facilities capable of charging a battery mounted on a mobile object and available time periods of the charging facilities;
providing, by the computer, a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods;
providing, by the computer, the mobile object with first route guidance information from a location of the mobile object to a charging facility selected by the user among the charging facility candidates when information indicating that charging of the battery has started at the charging facility is not acquired; and
providing, by the computer, a communication terminal used by the user with second route guidance information for moving to the destination when information indicating that charging of the battery has started is acquired.

14. An information management method comprising:
extracting, by a computer, charging facility candidates that are reachable within a prescribed distance or within a prescribed time from a destination, on the basis of charging facility information including location information of a plurality of charging facilities capable of charging a battery mounted on a mobile object and available time periods of the charging facilities;
providing, by the computer, a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods;
providing, by the computer, a communication terminal used by the user with first route guidance information from a location of the mobile object to the charging facility when it is determined that the mobile object has not continuously stopped at the charging facility for a prescribed time or longer; and
providing, by the computer, the communication terminal with second route guidance information for moving to the destination when it is determined that the mobile object has continuously stopped at the charging facility for the prescribed time or longer.

15. A program for causing a computer to:
extract charging facility candidates that are reachable within a prescribed distance or within a prescribed time from a destination, on the basis of charging facility information including location information of a plurality of charging facilities capable of charging a battery mounted on a mobile object and available time periods of the charging facilities;
provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods;
provide the mobile object with first route guidance information from a location of the mobile object to a charging facility selected by the user among the charging facility candidates when information indicating that charging of the battery has started at the charging facility is not acquired; and
provide a communication terminal used by the user with second route guidance information for moving to the destination when information indicating that charging of the battery has started is acquired.

16. A program for causing a computer to:
extract charging facility candidates that are reachable within a prescribed distance or within a prescribed time from a destination, on the basis of charging facility information including location information of a plurality of charging facilities capable of charging a battery mounted on a mobile object and available time periods of the charging facilities;
provide a user of the mobile object with at least one of a distance between a charging facility candidate determined to be available among the charging facility candidates and the destination and a travel time of the user of the mobile object and location information of the charging facility candidate, on the basis of destination information about the destination, an estimated time of arrival at the destination, and the available time periods;
provide a communication terminal used by the user with first route guidance information from a location of the mobile object to the charging facility when it is determined that the mobile object has not continuously stopped at the charging facility for a prescribed time or longer; and
provide the communication terminal with second route guidance information for moving to the destination when it is determined that the mobile object has continuously stopped at the charging facility for the prescribed time or longer.
